# EUROPEAN PATENT APPLICATION

(11) **EP 4 757 289 A1**
(43) Date of publication of application: **10.06.2026**
(21) Application number: 23947072.7
(22) Date of filing: 31.07.2023
(51) Int. Cl.: H04L 67/12

(54) **INFORMATION PROCESSING METHOD, FIRST DEVICE, INTERNET OF THINGS DEVICE, COMMUNICATION SYSTEM AND STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Stöckeler, Ferdinand
(86) International application number: PCT/CN2023/110443
(87) International publication number: WO 2025/025124

(57) **Abstract**

The disclosure relates to an information processing method, a first device, an Internet of Things device, a communication system, and a storage medium. The method comprises the steps that: a first device sends first control information to an Internet of Things device, wherein the first control information is used for instructing the Internet of Things device to execute a first operation, and the first operation includes at least one of the following actions: data inputting, data writing, or data rewriting. By sending the first control information to the Internet of Things device, the first device can perform operations such as data inputting, data writing or data rewriting on the first information of the Internet of Things device, thereby reliably implementing data operations on the Internet of Things device.

## Description

### TECHNICAL FIELD

The disclosure relates to the field of communication technology, specifically to a method for processing information, a first device, an internet of things (IoT) device, a communication system, and a storage medium.

### BACKGROUND

Ambient-internet of things (A-IoT) is a brand-new IoT technology. Compared with traditional IoT technologies, one prominent feature is that the ambient-IoT devices in the network are huge in quantity and scale, which may realize the inventory and storage of large-scale items.

### SUMMARY

In an internet of things (IoT)-based network, an issue of how to write data information into an IoT device remains to be resolved.

According to a first aspect of the embodiments of the disclosure, a method for processing information is provided, performed by a first device. The method includes:
sending first control information to an IoT device, in which the first control information is configured to instruct the IoT device to perform a first operation, and the first operation includes at least one of: data entry, data writing, or data rewriting.

According to a second aspect of the embodiments of the disclosure, a method for processing information is provided, and performed by an IoT device. The method includes:
receiving first control information sent by a first device, in which the first control information is configured to instruct the IoT device to perform a first operation, and the first operation includes at least one of: data entry, data writing, or data rewriting.

According to a third aspect of the embodiments of the disclosure, a first device is provided, including:
a transceiver module configured to send first control information to an internet of things (IoT) device, in which the first control information is configured to instruct the IoT device to perform a first operation, and the first operation includes at least one of: data entry, data writing, or data rewriting.

According to a fourth aspect of the embodiments of the disclosure, an IoT device is provided, including:
a transceiver module configured to receive first control information sent by a first device, in which the first control information is configured to instruct the IoT device to perform a first operation, and the first operation includes at least one of: data entry, data writing, or data rewriting.

According to a fifth aspect of the embodiments of the disclosure, a first device is provided, including:
one or more processors, and
a memory coupled to the one or more processors, in which the memory stores executable instructions, and when the executable instructions are executed by the one or more processors, the first device is caused to perform the method for processing information in the first aspect.

According to a sixth aspect of the embodiments of the disclosure, an IoT device is provided, including:
one or more processors; and
a memory coupled to the one or more processors, in which the memory stores executable instructions, and when the executable instructions are executed by the one or more processors, the IoT device is caused to perform the method for processing information in the second aspect.

According to a seventh aspect of the embodiments of the disclosure, a communication system is provided, including at least one of a first device and an IoT device. The first device is configured to implement the method for processing information in the first aspect, and the IoT device is configured to implement the method for processing information in the second aspect.

According to an eighth aspect of the embodiments of the disclosure, a storage medium is provided. The storage medium stores instructions that, when run on a communication device, cause the communication device to execute the method for processing information in the first aspect or in the second aspect.

The first device may perform operations such as data entry, writing or rewriting on the IoT device by sending the first control information to the IoT device, thereby reliably implementing data operations on the IoT device.

### BRIEF DESCRIPTION OF THE DRAWINGS

To illustrate the technical solutions in the embodiments of the disclosure more clearly, the accompanying drawings required for describing the embodiments are introduced below. The following drawings are merely some embodiments of the disclosure and shall not impose any specific limitation on the protection scope of the disclosure.
FIG. 1A is a schematic diagram of a communication system according to an embodiment of the disclosure.
FIG. 1B is a schematic diagram of a communication system according to an embodiment of the disclosure.
FIG. 1C is a schematic diagram of a communication system according to an embodiment of the disclosure.
FIG. 1D is a schematic diagram of a communication system according to an embodiment of the disclosure.
FIG. 1E is a schematic diagram of a communication system according to an embodiment of the disclosure. FIG. 2 is an interaction diagram of a method for processing information according to an embodiment of the disclosure.
FIG. 3A is a flow chart of a method for processing information according to an embodiment of the disclosure.
FIG. 3B is a flow chart of a method for processing information according to an embodiment of the disclosure.
FIG. 3C is a flow chart of a method for processing information according to an embodiment of the disclosure.
FIG. 3D is a flow chart of a method for processing information according to an embodiment of the disclosure.
FIG. 3E is a flow chart of a method for processing information according to an embodiment of the disclosure.
FIG. 3F is a flow chart of a method for processing information according to an embodiment of the disclosure.
FIG. 4A is a flow chart of a method for processing information according to an embodiment of the disclosure.
FIG. 4B is a flow chart of a method for processing information according to an embodiment of the disclosure.
FIG. 4C is a flow chart of a method for processing information according to an embodiment of the disclosure.
FIG. 4D is a flow chart of a method for processing information according to an embodiment of the disclosure.
FIG. 4F is a flow chart of a method for processing information according to an embodiment of the disclosure.

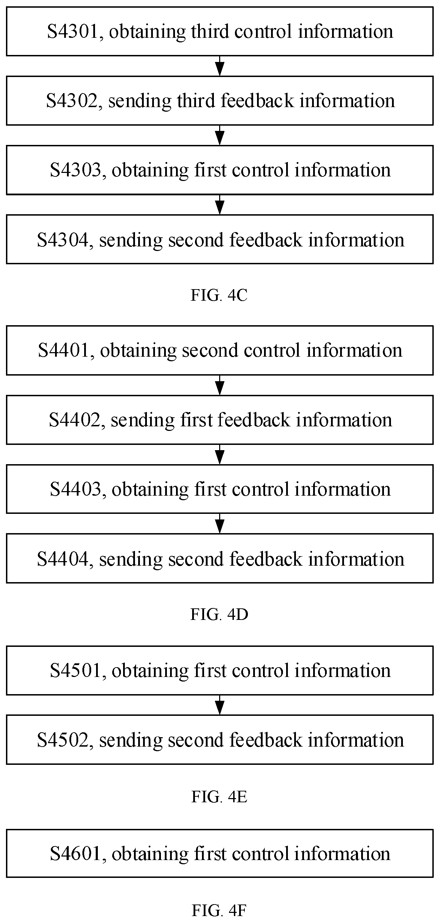

FIG. 4E is a flow chart of a method for processing information according to an embodiment of the disclosure.

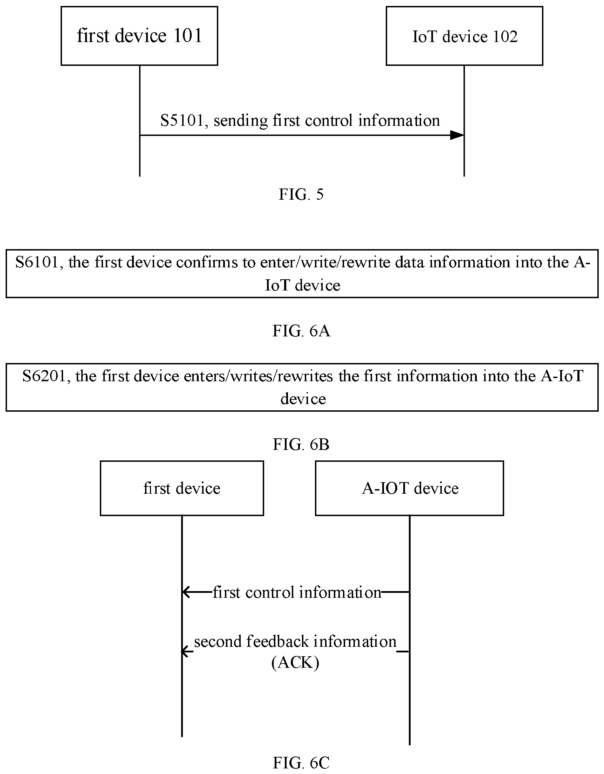

FIG. 5 is an interaction diagram of a method for processing information according to an embodiment of the disclosure.
FIG. 6A is a flow chart of a method for processing information according to an embodiment of the disclosure.
FIG. 6B is a flow chart of a method for processing information according to an embodiment of the disclosure.
FIG. 6C is an interaction diagram of a method for processing information according to an embodiment of the disclosure.

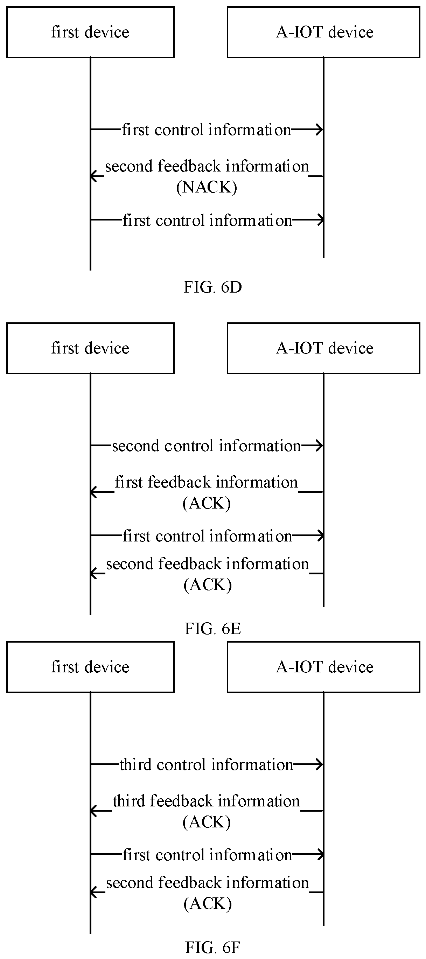

FIG. 6D is an interaction diagram of a method for processing information according to an embodiment of the disclosure.
FIG. 6E is an interaction diagram of a method for processing information according to an embodiment of the disclosure.
FIG. 6F is an interaction diagram of a method for processing information according to an embodiment of the disclosure.

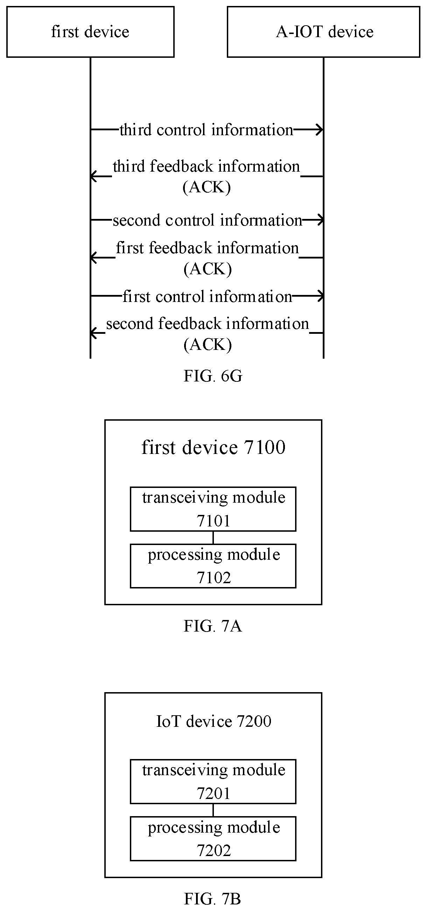

FIG. 6G is an interaction diagram of a method for processing information according to an embodiment of the disclosure.
FIG. 7A is a schematic diagram of a first device according to an embodiment of the disclosure.
FIG. 7B is a schematic diagram of an internet of things (IoT) device according to an embodiment of the disclosure.

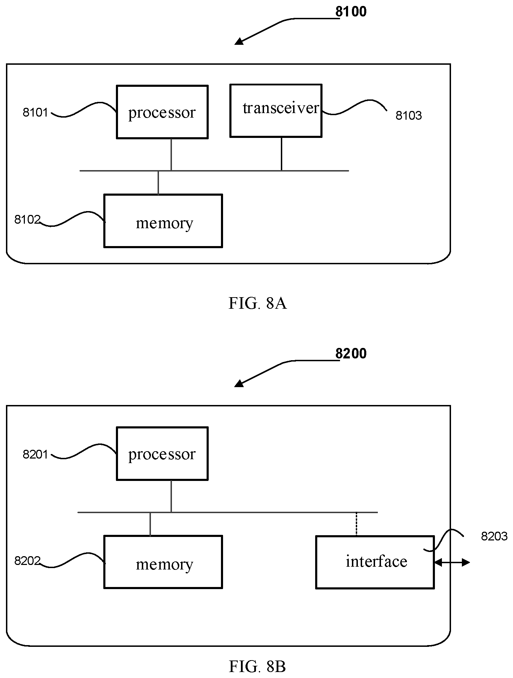

FIG. 8A is a schematic diagram of a communication device according to an embodiment of the disclosure.
FIG. 8B is a schematic diagram of a communication device according to an embodiment of the disclosure.

### DETAILED DESCRIPTION

Embodiments of the disclosure provide a method for processing information, a first device, an internet of things (IoT) device, a communication system, and a storage medium.

According to a first aspect of the embodiments of the disclosure, a method for processing information is provided, including:
sending first control information to an IoT device, in which the first control information is configured to instruct the IoT device to perform a first operation, and the first operation includes at least one of: data entry, data writing, or data rewriting.

In the aforementioned embodiments, a first device may perform operations such as data entry, writing or rewriting on the IoT device by sending the first control information to the IoT device, thereby reliably implementing data operations on the IoT device.

In combination with some embodiments of the first aspect, in some embodiments, the first device is any one of: an access network device, a core network device, a terminal, a radio frequency (RF) reader/writer, an intermediate node device, and an auxiliary node device.

In the aforementioned embodiments, the first device may be any one of the aforementioned devices, enabling all the aforementioned devices in a network to perform the operations such as data entry on data in the IoT device, which effectively improves a flexibility of the data entry for the IoT device.

In combination with some embodiments of the first aspect, in some embodiments, the method includes: before sending the first control information,
sending second control information, in which the second control information is configured to request the first operation to be performed, and
the first operation is performed in a case where the IoT device permits the first operation to be performed.

In the aforementioned embodiments, the first device may send the second control information first before sending the first control information, thereby enabling the IoT device to determine whether to permit the first device to perform the first operation in response to the second control information. This effectively prevents an unauthorized device from performing the operations such as data entry on the IoT device and improves a security performance of the IoT device.

In combination with some embodiments of the first aspect, in some embodiments, the method further includes:
receiving first feedback information,
in which the first feedback information indicates that the IoT device permits the first operation to be performed; or
the first feedback information indicates that the IoT device does not permit the first operation to be performed.

In the aforementioned embodiments, the first device may further receive the first feedback information, and then determine whether the first device is permitted to perform the aforementioned first operation on the IoT device based on the first feedback information, thus enabling the first device to effectively learn whether the request corresponding to the second control information succeeds.

In combination with some embodiments of the first aspect, in some embodiments, sending the first control information to the IoT device includes:
determining that a first condition is satisfied; and sending the first control information to the IoT device, in which the first condition includes at least one of:
a condition where the first device receives the first feedback information, and the first feedback information indicates that the IoT device permits the first operation to be performed;
a condition where the first device does not receive the first feedback information within a first time duration; or
a condition where the first device receives the first feedback information within a second time duration.

In the aforementioned embodiments, the first device may send the first control information only when the aforementioned first condition is satisfied, thereby effectively avoiding a transmission of invalid first control information in cases where the IoT device does not permit the first device to perform the aforementioned first operation, and significantly reducing power consumption and resource consumption of the first device.

In combination with some embodiments of the first aspect, in some embodiments, the method further includes: before sending the first control information,
sending third control information, in which the third control information is configured to instruct the IoT device to perform an identity verification on the first device, and
the first operation is performed in a case where the identity verification is passed.

In the aforementioned embodiments, the first device may send the third control information first before sending the first control information, thereby enabling the IoT device to perform the identity verification on the first device. The first operation is performed only when the identity verification is passed, which may effectively prevent the unauthorized device from performing operations on the IoT device, and effectively ensure the security of the IoT device.

In combination with some embodiments of the first aspect, in some embodiments, the method further includes:
receiving third feedback information,
in which the third feedback information indicates that the identity verification performed by the IoT device on the first device succeeds; or
the third feedback information indicates that the identity verification performed by the IoT device on the first device fails.

In the aforementioned embodiments, the first device may accurately learn whether the identity verification performed by the IoT device on the first device succeeds by receiving the third feedback information, or by determining whether the third feedback information is received.

In combination with some embodiments of the first aspect, in some embodiments, sending the first control information to the IoT device includes:
determining that a second condition is satisfied, and sending the first control information, in which the second condition includes at least one of:
a condition where the first device receives the third feedback information, in which the third feedback information indicates that the identity verification performed by the IoT device on the first device succeeds;
a condition where the first device does not receive the third feedback information within a third time duration; or
a condition where the first device receives the third feedback information within a fourth time duration.

In the aforementioned embodiments, the first device may send the first control information only when the aforementioned second condition is satisfied, thereby effectively avoiding the transmission of invalid first control information in a case where the identity verification performed by the IoT device on the first device fails, and effectively reducing the power consumption and resource consumption of the first device.

In combination with some embodiments of the first aspect, in some embodiments, the method further includes:
receiving second feedback information,
in which the second feedback information indicates that the IoT device succeeds in performing the first operation; or
the second feedback information indicates that the IoT device fails to perform the first operation.

In the aforementioned embodiments, the first device may accurately learn whether the IoT device successfully implements the first operation based on the first control information by means of the received second feedback information or by determining whether the first device receives the second feedback information.

In combination with some embodiments of the first aspect, in some embodiments, the method further includes:
determining that a third condition is satisfied, and continuing to send the first control information, in which the third condition includes at least one of:
a condition where the first device receives the second feedback information, in which the second feedback information indicates that the IoT device succeeds in performing the first operation;
a condition where the first device receives the second feedback information, in which the second feedback information indicates that the IoT device does not fail in performing the first operation;
a condition where the first device does not receive the second feedback information within a fifth time duration; or
a condition where the first device receives the second feedback information within a sixth time duration.

In the aforementioned embodiments, when the aforementioned third condition is satisfied, the first device may continue to send the first control information, thereby ensuring that the first operation performed by the first device on the IoT device may be reliably executed, and guaranteeing a reliability of the operations such as data entry on the IoT device.

In combination with some embodiments of the first aspect, in some embodiments, the first control information is configured to instruct the IoT device to perform the first operation on first information, and the first information includes at least one code domain in encoding information of the IoT device.

In the aforementioned embodiments, the first device may perform, based on the first control information, the operations such as data entry, data writing or data rewriting on the code domain in the encoding information of the IoT device, thereby effectively improving an accuracy of the encoding information of the IoT device and ensuring that all devices in an IoT may achieve reliable communication.

In combination with some embodiments of the first aspect, in some embodiments, the encoding information indicates status information of the IoT device, and the status information includes environmental information and self-information of the IoT device.

According to a second aspect of the embodiments of the disclosure, a method for processing information is provided, performed by an IoT device. The method includes:
receiving first control information sent by a first device, in which the first control information is configured to instruct the IoT device to perform a first operation, and the first operation includes at least one of: data entry, data writing, or data rewriting.

In combination with some embodiments of the second aspect, in some embodiments, the first device is any one of: an access network device, a core network device, a terminal, an RF reader/writer, an intermediate node device, and an auxiliary node device.

In combination with some embodiments of the second aspect, in some embodiments, the method further includes:
receiving second control information, in which the second control information is configured to request the first operation to be performed, and
the first operation is performed in a case where the IoT device permits the first operation to be performed.

In combination with some embodiments of the second aspect, in some embodiments, the method further includes:
sending first feedback information,
in which the first feedback information indicates that the IoT device permits the first operation to be performed; or
the first feedback information indicates that the IoT device does not permit the first operation to be performed.

In combination with some embodiments of the second aspect, in some embodiments, the first control information is sent in a case where the first device determines that a first condition is satisfied, and the first condition includes at least one of:
a condition where the first device receives the first feedback information, and the first feedback information indicates that the IoT device permits the first operation to be performed;
a condition where the first device does not receive the first feedback information within a first time duration; or
a condition where the first device receives the first feedback information within a second time duration.

In combination with some embodiments of the second aspect, in some embodiments, the method further includes:
receiving third control information, in which the third control information is configured to instruct the IoT device to perform an identity verification on the first device, and
the first operation is performed in a case where the identity verification is passed.

In combination with some embodiments of the second aspect, in some embodiments, the method further includes:
sending third feedback information,
**in** which the third feedback information indicates that the identity verification performed by the IoT device on the first device succeeds; or
the third feedback information indicates that the identity verification performed by the IoT device on the first device fails.

**In** combination with some embodiments of the second aspect, in some embodiments, the first control information is sent in a case where the first device determines that a second condition is satisfied, and the second condition includes at least one of:
a condition where the first device receives the third feedback information, in which the third feedback information indicates that the identity verification performed by the IoT device on the first device succeeds;
a condition where the first device does not receive the third feedback information within a third time duration; or
a condition where the first device receives the third feedback information within a fourth time duration.

In combination with some embodiments of the second aspect, in some embodiments, the method further includes:
sending second feedback information,
in which the second feedback information indicates that the IoT device succeeds in performing the first operation; or
the second feedback information indicates that the IoT device fails to perform the first operation.

In combination with some embodiments of the second aspect, in some embodiments, the method further includes:
maintaining the receiving of the first control information, in which the first control information is sent by the first device continuously in a case where the first device determines that a third condition is satisfied, and the third condition includes at least one of:
a condition where the first device receives the second feedback information, in which the second feedback information indicates that the IoT device succeeds in performing the first operation;
a condition where the first device receives the second feedback information, in which the second feedback information indicates that the IoT device does not fail in performing the first operation;
a condition where the first device does not receive the second feedback information within a fifth time duration; or
a condition where the first device receives the second feedback information within a sixth time duration.

In combination with some embodiments of the second aspect, in some embodiments, the first control information is configured to instruct the IoT device to perform the first operation on first information, and the first information includes at least one code domain in encoding information of the IoT device.

In combination with some embodiments of the second aspect, in some embodiments, the encoding information indicates status information of the IoT device, and the status information includes environmental information and self-information of the IoT device.

According to a third aspect of the embodiments of the disclosure, a first device is provided, which includes at least one of a transceiving module or a processing module. The first device is configured to implement the optional implementations of the first aspect.

According to a fourth aspect of the embodiments of the disclosure, an IoT device is provided, which includes at least one of a transceiving module and a processing module. The IoT device is configured to implement the optional implementations of the second aspect.

According to a fourth aspect of the embodiments of the disclosure, a first device is provided, which includes one or more processors; and a memory configured to store processor-executable instructions, in which the one or more processors are configured to implement the optional implementations of the first aspect.

According to a fifth aspect of the embodiments of the disclosure, an IoT device is provided, which includes one or more processors; and a memory configured to store processor-executable instructions, in which the one or more processors are configured to implement the optional implementations of the second aspect.

According to a sixth aspect of the embodiments of the disclosure, a communication system is provides, which includes: a first device and an IoT device, in which the first device is configured to perform the method described in the optional implementations of the first aspect, and the IoT device is configured to perform the method described in the optional implementations of the second aspect.

According to a seventh aspect of the embodiments of the disclosure, a storage medium is provides. The storage medium stores instructions that, when executed on a communication device, cause the communication device to perform the methods described in the optional implementations of the first aspect and the second aspect.

According to an eighth aspect of the embodiments of the disclosure, a program product is provided, which, when executed by a communication device, causes the communication device to perform the methods described in the optional implementations of the first aspect and the second aspect.

According to a ninth aspect of the embodiments of the disclosure, a computer program is provide, which, when run on a computer, causes the computer to perform the methods described in the optional implementations of the first aspect and the second aspect.

According to a tenth aspect of the embodiments of the disclosure, a chip or chip system is provided, which includes a processing circuit. The chip or chip system is configured to perform the methods described in the optional implementations of the first aspect and the second aspect.

**It** should be understood that the aforementioned first device, IoT device, communication system, storage medium, program product, computer program, chip or chip system are all configured to perform the methods proposed in the embodiments of the disclosure. Therefore, for the achievable beneficial effects, reference may be made to the beneficial effects in the corresponding methods, which are not repeated herein.

The embodiments of the disclosure provide a method for processing information, a first device, a wireless receiver, a communication apparatus, and a communication system. In some embodiments, the terms including first device, first device, first communication device, transmitter, communication transmitter, and first communication apparatus may be used interchangeably; and the terms including wireless receiver, second device, second communication device, receiver, communication receiver, and second communication apparatus may also be used interchangeably.

The embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, optional implementations in a certain embodiment may be combined arbitrarily; furthermore, the embodiments may be combined arbitrarily. For example, some or all steps of different embodiments may be combined arbitrarily, and a certain embodiment may be combined arbitrarily with optional implementations of other embodiments.

In each embodiment of the disclosure, unless otherwise specified and without logical conflict, the terms and/or descriptions between the embodiments are consistent and may be cross-referenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, unless otherwise stated, elements expressed in the singular form, such as "a", "an", "the", "said", "aforementioned", and "this", may mean "one and only one", or "one or more", "at least one", etc. For example, when articles such as "a", "an", and "the" in English are used in translation, the noun following the article may be understood as a singular form or a plural form.

In the embodiments of the disclosure, "a plurality of" refers to two or more.

In some embodiments, terms such as "at least one (of)", "one or more", "a plurality of", and "multiple" may be used interchangeably.

In some embodiments, recording methods such as "at least one of A and B", "A and/or B", "A in one case and B in another case", and "one case A and another case B" may include the following technical solutions depending on the context: executing A in some embodiments (executing A independently of B); executing B in some embodiments (executing B independently of A); selectively executing either A or B in some embodiments (A and B are selectively executed); and executing both A and B in some embodiments (both A and B are executed). The same applies when there are more branches such as A, B, and C.

**In** some embodiments, recording methods such as "A or B" may include the following technical solutions depending on the context: executing A in some embodiments (executing A independently of B); executing B in some embodiments (executing B independently of A); and selectively executing either A or B in some embodiments (A and B are selectively executed). The same applies when there are more branches such as A, B, and C.

Prefixes such as "first" and "second" in the embodiments of the disclosure are merely used to distinguish different description objects and do not limit the position, order, priority, quantity, or content of the description objects. For the description of the description objects, refer to the description in the claims or the context of the embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the quantity of the description object is not limited by the ordinal number and may be one or more. Taking "the first apparatus" as an example, the quantity of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "containing A", "used to indicate A", and "carrying A" may be interpreted as directly carrying A or indirectly indicating A.

In some embodiments, the terms "in response to...", "in response to determining that...", "in the case that...", "when...", "at the time when...", "if...", and "in the event that..." may be used interchangeably.

**In** some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, "apparatus" and "device" may be construed as either entity or virtual. Names of the "apparatus" and "device" are not limited to those recorded in the embodiments, and in some cases, may also be understood as "equipment", "device", "circuit", "network element", "node", "function", "unit", "section", "system", "network", "chip", "chip system", "entity", and "subject", and the like.

**In** some embodiments, the term "network" may be interpreted as an apparatus included in a network (e.g., an access network device, a core network device, etc.).

In some embodiments, "access network device (AN device)" may also be called "radio access network device (RAN device)", "base station (BS)", "radio base station", "fixed station", and, in some embodiments, may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" and the like.

**In** some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" and the like.

In some embodiments, acquiring data, information, etc., may comply with the laws and regulations of the country where it is located.

In some embodiments, data, information, etc., may be acquired with the user's consent.

In addition, each element, each row, or each column in the tables of the embodiments of the disclosure may be implemented as an independent embodiment, and any combination of any elements, any rows, or any columns may also be implemented as an independent embodiment.

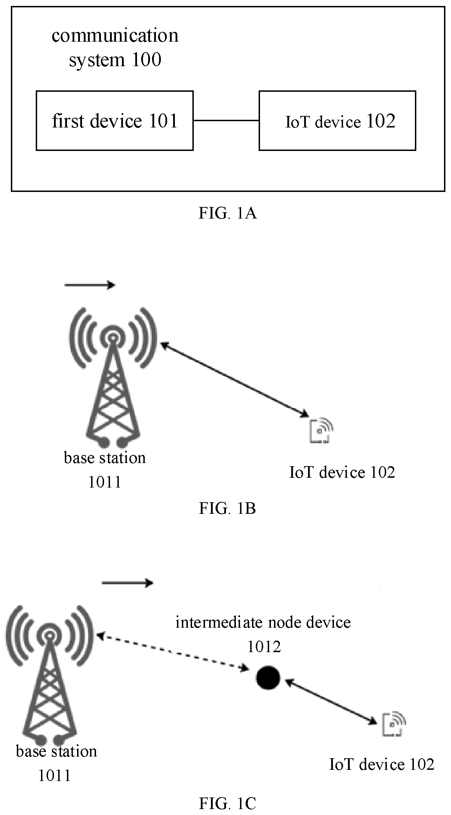

FIG. 1A is a schematic diagram of a communication system according to an embodiment of the disclosure. As shown in FIG. 1A, a communication system 100 includes a first device 101 and an IoT device 102.

In some embodiments, the IoT device 102 may be an ambient internet of things (A-IoT), an ambient-IoT device, or an ambient-IoT terminal. Optionally, an A-IoT device may also be referred to as an "A-IoT device", an "A-IoT tag", an "A-IoT UE", etc., which are not limited herein in the embodiments of the disclosure.

In some embodiments, the intermediate node device and the auxiliary node device may be devices in an ambient-IoT network. Optionally, the intermediate node device and the auxiliary node device may also be ambient-IoT devices.

Referring to FIG. 1B, in some embodiments, the IoT device 102 may be directly connected to a base station 1011. In such a networking mode, the base station 1011 may serve as the first device 101.

Referring to FIG. 1C, in some embodiments, the base station 1011 may be connected to an intermediate node device 1012 for uplink and downlink communication, and the IoT device 102 may be connected to the intermediate node device 1012 for uplink and downlink communication. In such a networking mode, both the base station 1011 and the intermediate node device 1012 may serve as the first device 101.

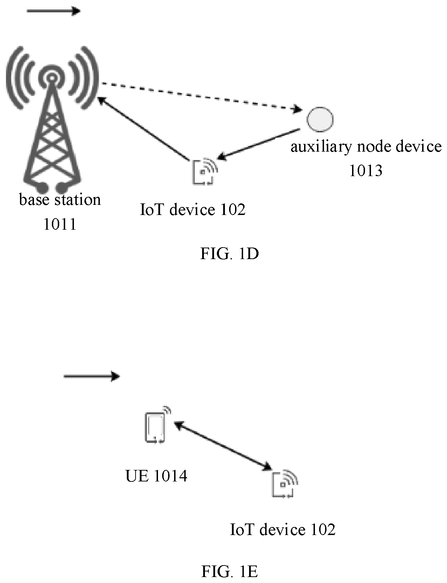

Referring to FIG. 1D, in some embodiments, the base station 1011 may be connected to an auxiliary node device 1013 for uplink and downlink communication, and the auxiliary node device 1013 may also be connected to the IoT device 102 for uplink and downlink communication. In such a networking mode, both the base station 1011 and the auxiliary node device 1013 may serve as the first device 101.

Referring to FIG. 1E, in some embodiments, a UE 1014 may be connected to the IoT device 102 for uplink and downlink communication. In such a networking mode, the UE 1014 may serve as the first device 101.

Optionally, the UE 1014 may also be connected to an access network device for uplink and downlink communication.

In some embodiments of the disclosure, the IoT device 102 is an ambient-loT device in an ambient-IoT network architecture. In some embodiments, ambient-IoT devices in the ambient-IoT network are large in quantity and scale, capable of conducting inventory and storage of large-scale items. Compared with NB-IoT devices, the ambient-IoT device features a simpler structure and lower hardware cost and maintenance cost, and such device may either include a power supply component or not.

Optionally, a device equipped with the power supply component may be referred to as an active device, and a device without the power supply component may be referred to as a passive device. The passive device is characterized in that it may obtain power supply from other devices or natural conditions, requiring no manual maintenance. The active device may be equipped with a small number of energy storage components, such as a capacitor component, which may supply energy for communication.

In some embodiments, ambient-IoT devices may be classified into three types: Device A has no energy storage capacity and cannot perform independent signal generation/amplification; Device B has energy storage capacity but cannot perform independent signal generation; Device C has energy storage capacity and can generate signals independently.

In some embodiments, the first device 101 may be any one of: the access network device, the core network device, the terminal, the RF reader/writer, the intermediate node device, and the auxiliary node device.

In some embodiments, the RF reader/writer is a device capable of reading data from the ambient-IoT device and/or writing data into the ambient-IoT device. Optionally, the RF reader/writer may also be integrated into the terminal, the intermediate node device, the auxiliary node device, or the network device such as the base station.

In some embodiments, the terminal includes, for example, at least one of a mobile phone, a wearable device, an IoT device, a vehicle with communication functions, an intelligent vehicle, a Pad, a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the access network device is, for example, a node or device configured to connect the terminal to a wireless network. The access network device may include at least one of an evolved nodeB (eNB) in a 5G communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, and an access node in a wireless fidelity (Wi-Fi) system, but is not limited thereto.

In some embodiments, the technical solutions of the disclosure may be applicable to an open RAN architecture. In this case, interfaces between access network devices or within the access network device involved in the embodiments of the disclosure may be changed to internal interfaces of the open RAN, and processes and information interactions between these internal interfaces may be implemented by software or programs.

In some embodiments, the access network device may be composed of a central unit (CU) and a distributed unit (DU), where the CU may also be referred to as a control unit. The CU-DU architecture enables decoupling of protocol layers of the access network device, with the functions of some protocol layers placed under a centralized control of the CU, and the functions of the remaining part or all of the protocol layers distributed in the DUs, which are centrally controlled by the CU, though not limited thereto.

In some embodiments, the core network device may be a single device including a first network element, a second network element, etc., or may be a plurality of devices or device groups respectively including all or part of the first network element, the second network element, etc. A network element may be virtual or physical. The core network includes, for example, at least one of an evolved packet core (EPC), a 5G core network (5GCN), and a next generation core (NGC).

It is understandable that the communication system described in the embodiments of the disclosure is for the purpose of more clearly illustrating the technical solutions of the embodiments of the disclosure, and does not constitute a limitation on the technical solutions proposed in the embodiments of the disclosure. As understood by those of ordinary skill in the art, with the evolution of system architectures and the emergence of new service scenarios, the technical solutions proposed in the embodiments of the disclosure are equally applicable to similar technical problems.

The following embodiments of the disclosure may be applied to the communication system 100 shown in FIG. 1A, or some entities in the communication system 100, but are not limited thereto. Each entity shown in FIG. 1A is an example. The communication system may include all or part of the entities in FIG. 1A, or may also include other entities not shown in FIG. 1A. The number and form of each subject are arbitrary, and each entity may be either physical or virtual. The connection relationships between the entities are exemplary. The entities may either be disconnected or connected to each other, and the connection may be in any manner, either in a direct connection or in an indirect connection, and either in a wired connection or in a wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, internet of things (IoT) system, vehicle-to-everything (V2X), systems using other method for processing information, next-generation systems extended based on them, etc. In addition, a plurality of systems may be combined (for example, a combination of LTE or LTE-A and 5G, etc.) for application.

In some embodiments, a structure of the ambient-IoT device is relatively simple, and data information the ambient-IoT device contains may potentially include a plurality of types, such as data information and control information. In some embodiments, one form of the data information is encoding information, e.g., ambient-IoT encoding. The ambient-IoT encoding may include a plurality of code domains, and configuration modes of these code domains may be the same or different.

In some embodiments, there are three configuration modes for a specific code domain, namely a static configuration, a semi-static configuration, and a dynamic configuration.

In some embodiments, when the first device reads information of the ambient-loT device, the first device already knows a unique identifier (ID) of the ambient-IoT device. Optionally, when the ambient-IoT device accesses a network, the ambient-IoT device has notified the first device of identification information of the ambient-IoT device, or the identification information of the ambient-IoT device is written into, entered into, or configured for the ambient-IoT device by the first device.

In some embodiments, there are a plurality of cases for reading the data information of the ambient-IoT device, including: the data information being read by the access network device; the data information being read by an intermediate node; the data information being read by an auxiliary node; the data information is read by the terminal; and the data information is read by the RF reader/writer.

To enable the first device to read the data information of the IoT device more reliably, the embodiments of the disclosure provide a method for processing information, a first device, an IoT device, a communication system, and a storage medium involved in the following embodiments.

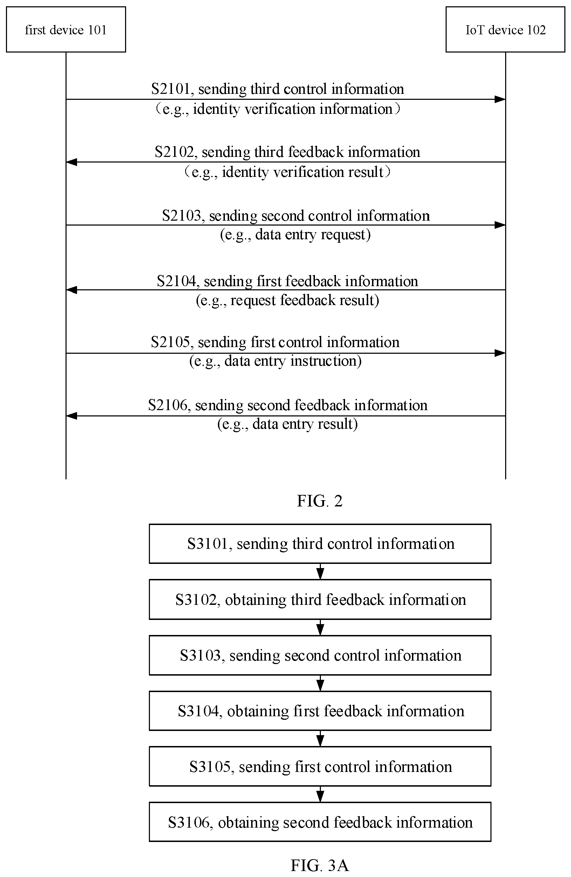

FIG. 2 is an interaction diagram of a method for processing information according to an embodiment of the disclosure. As shown in FIG. 2, an embodiment of the disclosure relates to the method for processing information applied to a communication system, where the communication system includes a first device and an IoT device. The method includes the following steps.

At step S2101, the first device 101 sends third control information.

In some embodiments, the third control information is configured to instruct the IoT device to perform identity verification on the first device 101. Optionally, the third control information is configured for the IoT device 102 to perform the identity verification on the first device 101. Optionally, the IoT device 102 performs the identity verification on the first device 101 according to the third control information. Optionally, the third control information is configured for the IoT device 102 to determine third feedback information. Optionally, the third control information is configured for the IoT device 102 to determine whether to send the third control information.

In some embodiments, the third control information may include an identity verification code. Optionally, the identity verification code may be used by the loT device 102 to perform the identity verification on the first device 101. Optionally, the identity verification code is used by the first device 101 to indicate an identity of the first device 101 to the IoT device 102, or to declare that the first device 101 has a right to entry data into, write data into, rewrite data in, or obtain data from the IoT device 102. Optionally, the identity verification code may be configured to uniquely identify the first device 101.

In some embodiments, the identity verification code may be a symmetric key such as a random number or a pseudo-random number. Optionally, the IoT device 102 may store verification information for verifying the identity verification code. Optionally, the verification information may be, for example, information corresponding to the identity verification code. Optionally, the verification information may be pre-configured in the IoT device 102 by the first device 101. For example, before sending the third control information, the first device 101 may send the verification information to the IoT device 102, so that the IoT device 102 configures the verification information, and after receiving the identity verification information corresponding to the first device 101, the IoT device 102 may perform the identity verification on the first device 101 based on the verification information.

In some embodiments, the IoT device 102 receives the third control information.

In some embodiments, the third control information may also be referred to as "identity verification information", "identity verification code", "device identity certificate", etc., and embodiments of the disclosure impose no limitations on the name of the third control information.

At step S2102, the IoT device 102 sends third feedback information.

In some embodiments, the third feedback information is sent by the IoT device 102 in a case where the identity verification on the first device 101 is successful. Optionally, the IoT device 102 may not send the third feedback information in a case where the identity verification is unsuccessful or fails. Optionally, the third feedback information may indicate that the identity verification performed by the IoT device 102 on the first device 101 succeeds. Optionally, the third feedback information is an ACK message, used to indicate that the identity verification performed by the IoT device 102 on the first device 101 succeeds.

In some embodiments, the third feedback information is sent by the IoT device 102 in a case where the identity verification on the first device 101 is unsuccessful. Optionally, the loT device 102 may not send the third feedback information in a case where the identity verification succeeds. Optionally, the third feedback information may indicate that the identity verification performed by the IoT device 102 on the first device 101 fails. Optionally, the third feedback information is a NACK message, used to indicate that the identity verification performed by the IoT device 102 on the first device 101 fails.

In some embodiments, the third feedback information indicates whether the identity verification performed by the IoT device 102 on the first device 101 succeeds. Optionally, the IoT device 102 sends the third feedback information regardless of whether the identity verification succeeds or fails. Optionally, the third feedback information may indicate whether the identity verification performed by the IoT device 102 on the first device 101 succeeds or fails. Optionally, the third feedback information may include one bit. When a value of the one bit is "1", the third feedback information may indicate that the identity verification performed by the IoT device 102 on the first device 101 succeeds. When the value of the bit is "0", the third feedback information may indicate that the identity verification performed by the IoT device 102 on the first device 101 fails. Optionally, the third feedback information may be the ACK message or the NACK message. When a value represented by the one bit is "ACK", the third feedback information may indicate that the identity verification performed by the IoT device 102 on the first device 101 succeeds. When the value represented by the one bit is "NACK", the third feedback information may indicate that the identity verification performed by the IoT device 102 on the first device 101 fails.

In some embodiments, the first device 101 receives the third feedback information. Optionally, the first device 101 determines, according to the third feedback information, whether the identity verification performed by the IoT device 102 on the first device 101 succeeds or fails. Optionally, the first device 101 determines, according to whether the third feedback information is received, whether the identity verification performed by the IoT device 102 on the first device 101 succeeds or fails.

For example, when the third feedback information is sent in a case where the identity verification performed by the IoT device 102 on the first device 101 succeeds, the first device 101 may determine, upon receiving the third feedback information, that the identity verification performed by the IoT device 102 on the first device 101 succeeds. In another example, when the third feedback information is sent in a case where the identity verification performed by the IoT device 102 on the first device 101 is unsuccessful, the first device 101 may determine, upon receiving the third feedback information, that the identity verification performed by the loT device 102 on the first device 101 is unsuccessful. In yet another example, when the third feedback information indicates whether the identity verification performed by the IoT device 102 on the first device 101 succeeds, the first device 101 may determine, based on a value of a bit corresponding to the third feedback information, whether the identity verification performed by the IoT device 102 on the first device 101 succeeds.

In some embodiments, the third feedback information may be determined by the IoT device 102 according to the third control information. In some embodiments, whether the IoT device 102 sends the third feedback information may be determined according to the third control information.

For example, when the IoT device 102 determines that the identity verification fails based on the identity verification code in the third control information, the IoT device 102 may send the third feedback information indicating that the identity verification on the first device 101 fails, or not send the third feedback information indicating that the identity verification on the first device 101 succeeds.

In some embodiments, the first device 101 receives the third feedback information. Optionally, the first device 101 determines whether to send second control information according to the third feedback information. Optionally, the first device 101 determines whether to send first control information according to the third feedback information. Optionally, the first device 101 determines whether a second condition is satisfied according to the third feedback information. Optionally, the first device 101 determines whether the second condition is satisfied according to whether the third feedback information is received.

In some embodiments, the third feedback information may also be referred to as "identity verification result", "verification feedback information", "verification success indication", "verification failure indication", etc., and embodiments of the disclosure impose no limitations on the name of the third feedback information.

At step S2103, the first device 101 sends second control information.

In some embodiments, the second control information is configured to request the first operation to be performed on the first device 101. Optionally, the first control information is configured to instruct the IoT device 102 to determine whether to perform the first operation on the first device 101. Optionally, the first control information is configured to instruct the IoT device 102 to determine whether to allow the first device 101 to perform the first operation on the first device 101. Optionally, the second control information is configured for the IoT device 102 to determine second feedback information. Optionally, the second control information is configured for the IoT device 102 to determine whether to send the second feedback information.

In some embodiments, the first device 101 determines that a second condition is satisfied, and sends the second control information. Optionally, the second condition includes at least one of: a condition where the first device 101 receives the third feedback information, and the third feedback information indicates that the identity verification performed by the IoT device 102 on the first device 101 succeeds; a condition where the first device 101 does not receive the third feedback information within a third time duration; or a condition where the first device 101 receives the third feedback information within a fourth time duration. Optionally, when the third feedback information is sent in a case where the identity verification performed by the IoT device 102 on the first device 101 fails, the second condition may not include the following: receiving the third feedback information within the fourth time duration. Optionally, the condition of receiving the third feedback information within the fourth time duration may be replaced with: receiving the third feedback information within the fourth time duration, and the third feedback information indicates that the identity verification performed by the IoT device 102 on the first device 101 succeeds. Optionally, the condition of not receiving the third feedback information within the third time duration may be replaced with: a condition where the third feedback information is sent in a case where the identity verification performed by the IoT device 102 on the first device 101 is unsuccessful, and the third feedback information is not received within the third time duration.

Optionally, when the third feedback information is sent in a case where the identity verification performed by the IoT device 102 on the first device 101 is unsuccessful, or the third feedback information indicates whether the identity verification performed by the IoT device 102 on the first device 101 succeeds, the second condition may include any one or more of the above conditions.

In some embodiments, the IoT device 102 receives the second control information. Optionally, the IoT device 102 receives the second control information in a case where the identity verification performed by the IoT device 102 on the first device 101 succeeds. Optionally, in response to the identity verification on the first device 101 succeeding, the IoT device 102 expects to receive the second control information. Optionally, the IoT device 102 monitors the second control information when the identity verification on the first device 101 succeeds.

In some embodiments, the second control information may be referred to as "data entry request information", "write instruction information", "data operation request", etc., and embodiments of the disclosure impose no limitations on the name of the second control information.

At step S2104, the IoT device 102 sends first feedback information.

In some embodiments, the first feedback information is sent in a case where the IoT device 102 permits the first operation to be performed. Optionally, the IoT device 102 may not send the first feedback information in a case where the IoT device 102 does not permit the first operation to be performed. Optionally, the first feedback information may indicate that the IoT device 102 permits the first operation to be performed. Optionally, the first feedback information is an ACK message, indicating that the IoT device 102 permits the first operation to be performed.

In some embodiments, the first feedback information is sent in a case where the IoT device 102 does not permit the first operation to be performed. Optionally, the IoT device 102 may not send the first feedback information when the IoT device 102 permits the first operation to be performed. Optionally, the first feedback information may indicate that the IoT device 102 does not permit the first operation to be performed. Optionally, the first feedback information is a NACK message, indicating that the IoT device 102 does not permit the first operation to be performed.

In some embodiments, the first feedback information indicates whether the IoT device 102 permits the first operation to be performed. Optionally, the IoT device 102 sends the first feedback information regardless of whether the IoT device 102 permits the first device 101 to perform the first operation. Optionally, the first feedback information may indicate whether the IoT device 102 permits the first operation to be performed. Optionally, the first feedback information may include one bit. When the value of the one bit is "1", the first feedback information may indicate that the IoT device 102 permits the first operation to be performed. When the value of the one bit is "0", the first feedback information may indicate that the IoT device 102 does not permit the first operation to be performed. Optionally, the first feedback information may be the ACK message or the NACK message. When the value represented by the one bit is "ACK", the first feedback information may indicate that the IoT device 102 permits the first operation to be performed. When the value represented by the one bit is "NACK", the first feedback information may indicate that the IoT device 102 does not permit the first operation to be performed.

In some embodiments, the first device 101 receives the first feedback information. Optionally, the first device 101 determines whether the IoT device 102 permits the first operation to be performed according to the first feedback information. Optionally, the first device 101 determines whether the IoT device 102 performs the first operation according to whether the first feedback information is received.

For example, when the first feedback information is sent in a case where the IoT device 102 permits the first operation to be performed, the first device 101 may determine, in a case of receiving the first feedback information, that the IoT device 102 permits the first operation to be performed. In another example, when the first feedback information is sent in a case where the IoT device 102 does not permit the first operation to be performed, the first device 101 may determine, in a case of receiving the first feedback information, that the IoT device does not permit the first operation to be performed. In yet another example, when the first feedback information indicates whether the IoT device 102 permits the first operation to be performed, the first device 101 may determine, based on a value of a bit corresponding to the first feedback information, whether the IoT device 102 permits the first operation to be performed.

In some embodiments, the first device 101 receives the first feedback information. Optionally, the first device 101 determines whether to send the first control information according to the first feedback information. Optionally, the first device 101 determines whether to send the third control information according to the first feedback information. Optionally, the first device 101 determines whether a first condition is satisfied according to the first feedback information. Optionally, the first device 101 determines whether the first condition is satisfied according to whether the first feedback information is received.

In some embodiments, the first feedback information may be referred to as "request feedback result", "operation permission notification", "data entry rejection indication", "write permission information", etc., and embodiments of the disclosure impose no limitations on the name of the first feedback information.

At step S2105, the first device 101 sends first control information.

In some embodiments, the first control information is configured to instruct the IoT device 102 to perform the first operation. Optionally, the first control information is configured to instruct the IoT device 102 to perform the first operation on first information. Optionally, the first control information indicates the first information and the first operation. Optionally, the first control information is configured to instruct the IoT device 102 to perform the first operation according to the first control information.

In some embodiments, the first operation includes at least one of: data entry, data writing, or data rewriting.

In some embodiments, the first information includes at least one of the following of the IoT device 102: static data information, semi-static data information, dynamic data information, static control information, semi-static control information, dynamic control information.

In some embodiments, the first information includes at least one code domain in encoding information of the IoT device 102. Optionally, the encoding information of the IoT device 102 may indicate status information of the IoT device 102, where the status information may include, for example, environment information and self-information of the IoT device 102. Optionally, the encoding information of the IoT device 102 may include a code domain corresponding to ID information and/or a code domain corresponding to item information. Optionally, the encoding information of IoT device data may include one or more of the following code domains: a codebook type; an encoding version number; a domain name manager; a country/region code; an administrative region code within a country; an item status type; an item status indication domain; an item type; a codebook application scenario; a cell number; an operator code; an item serial number; or an associated code.

For example, the first control information may be configured, for example, to perform data writing operations on code domains such as the cell number, the item status type, and the codebook type of the IoT device 102.

In some embodiments, the first control information is sent by the first device 101 in a case of determining that the first condition is satisfied. Optionally, the first device 101 sends the first control information in response to satisfying the first condition. Optionally, the first device 101 sends the first control information when the first device 101 determines that the first condition is satisfied. Optionally, the first condition includes at least one of: a condition where the first device 101 receives the first feedback information, and the first feedback information indicates that the IoT device 102 permits the first operation to be performed; a condition where the first device 101 does not receive the first feedback information within a first time duration; or a condition where the first device 101 receives the first feedback information within a second time duration. Optionally, the condition of receiving the first feedback information within the second time duration may be replaced with: receiving the first feedback information within the second time duration, and the first feedback information indicates that the IoT device 102 permits the first operation to be performed. Optionally, the condition of not receiving the first feedback information within the first time duration may be replaced with: a condition where the first feedback information is sent in a case where the IoT device 102 does not permit the first operation to be performed, and the first feedback information is not received within the first time duration.

Optionally, when the first feedback information is sent in a case where the IoT device 102 does not permit the first operation to be performed, the first condition may not include the condition where the first feedback information is received within the second time duration.

Optionally, when the first feedback information is sent in a case where the IoT device 102 permits the first operation to be performed, or the first feedback information indicates whether the IoT device 102 permits the first operation to be performed, the first condition may include any one or more of the above conditions.

In some embodiments, the first control information is sent by the first device 101 in a case where the first device 101 determines that the second condition is satisfied. Optionally, the first device 101 sends the first control information in response to satisfying the second condition. Optionally, the first device 101 sends the first control information when the first device 101 determines that the second condition is satisfied. Optionally, the second condition includes at least one of: the condition where the third feedback information is received, and the third feedback information indicates that the identity verification performed by the IoT device 102 on the first device 101 is successful; the condition where the third feedback information is not received within the third time duration; the condition where the third feedback information is received within the fourth time duration.

Optionally, when the third feedback information is sent in a case where the identity verification performed by the IoT device 102 on the first device 101 fails or is unsuccessful, the second condition may not include the condition where the third feedback information is received within the fourth time duration.

Optionally, when the third feedback information is sent in a case where the identity verification performed by the IoT device 102 on the first device 101 is successful, or the third feedback information indicates whether the identity verification performed by the IoT device 102 on the first device 101 is successful, the second condition may include any one or more of the above conditions.

In some embodiments, the first control information may be sent by the first device 101 in a case where the first device 101 determines that both the first condition and the second condition are satisfied. Optionally, the first device 101 sends the first control information when the first device 101 determines that both the first condition and the second condition are satisfied.

In some embodiments, the first control information may be referred to as "data entry instruction", "operation instruction", "indication information", "data writing information", etc., and embodiments of the disclosure impose no limitations on the name of the first control information.

At step S2106, the IoT device 102 sends second feedback information.

In some embodiments, the second feedback information is sent by the IoT device 102 in a case where the IoT device 102 succeeds in performing the first operation. Optionally, the IoT device 102 sends the second feedback information upon determining that the first operation is successfully performed. Optionally, the IoT device 102 sends the second feedback information upon determining that an operation on the first information fails or is unsuccessful. Optionally, the second feedback information indicates that the IoT device 102 succeeds in performing the first operation. Optionally, the second feedback information is an ACK message, indicating that the IoT device 102 succeeds in performing the first operation.

In some embodiments, the second feedback information is sent by the IoT device 102 in a case where the IoT device 102 fails to perform the first operation. Optionally, the IoT device 102 sends the second feedback information upon determining that the first operation fails or is unsuccessful. Optionally, the IoT device 102 sends the second feedback information upon determining that the operation on the first information is successful. Optionally, the second feedback information indicates that the IoT device 102 fails or is unsuccessful in performing the first operation. Optionally, the second feedback information is a NACK message, indicating that the IoT device 102 fails or is unsuccessful in performing the first operation.

In some embodiments, the second feedback information indicates whether the IoT device 102 succeeds in performing the first operation. Optionally, the second feedback information indicates whether the IoT device 102 fails to perform the first operation. Optionally, the IoT device 102 sends the second feedback information regardless of whether the loT device 102 succeeds in performing the first operation. Optionally, the second feedback information may be configured to instruct the first device 101 to continue sending the first control information. Optionally, the second feedback information may include one bit. When a value of the one bit is "1", the second feedback information may indicate that the IoT device 102 succeeds in performing the first operation or does not fail to perform the first operation. When the value of the one bit is "0", the second feedback information may indicate that the IoT device 102 fails or is unsuccessful in performing the first operation. Optionally, the second feedback information may be the ACK message or the NACK message. When a value represented by the one bit is "ACK", the second feedback information may indicate that the IoT device 102 succeeds in performing the first operation. When the value represented by the one bit is "NACK", the second feedback information may indicate that the IoT device 102 fails to perform the first operation.

In some embodiments, the first device 101 receives the second feedback information. Optionally, the first device 101 determines whether to continue sending the first control information according to the second feedback information. Optionally, the first device 101 determines whether to repeatedly perform step S2105 according to the second feedback information.

In some embodiments, the first device 101 continues sending the first control information in a case where the first device 101 determines that a third condition is satisfied. Optionally, the third condition includes at least one of: a condition where the first device 101 receives the second feedback information, and the second feedback information indicates that the IoT device 102 succeeds in performing the first operation; a condition where the first device 101 receives the second feedback information, and the second feedback information indicates that the IoT device 102 does not fail to perform the first operation; a condition where the first device 101 does not receive the second feedback information within a fifth time duration; or a condition where the first device 101 receives the second feedback information within a sixth time duration. Optionally, the condition where the second feedback information is not received within the fifth time duration may be replaced with: a condition where the second feedback information is received within the sixth time duration, and the second feedback information indicates that the IoT device 102 succeeds in performing the first operation. Optionally, the condition where the second feedback information is not received within the fifth time duration may be replaced with: a condition where the second feedback information is sent in a case where the IoT device 102 is unsuccessful in performing the first operation, and the second feedback information is not received within the fifth time duration.

Optionally, when the second feedback information is sent in a case where the IoT device 102 fails or is unsuccessful in performing the first operation, the third condition may not include the condition of receiving the first feedback information within the sixth time duration.

Optionally, when the first feedback information is sent in a case where the IoT device 102 succeeds in performing the first operation, or the second feedback information indicates whether the IoT device 102 succeeds in performing or fails to perform the first operation, the third condition may include any one or more of the above conditions.

In the embodiments of the disclosure, the first time duration, the second time duration, the third time duration, the fourth time duration, the fifth time duration, and the sixth time duration may be the same or different from each other, which is not limited in the embodiments of the disclosure. Optionally, the above time durations may be specified by a protocol. Optionally, the above time durations may be indicated by an upper layer. Optionally, the above time durations may be independently determined by the first device 101.

In some embodiments, the second feedback information may be referred to as "data entry result", "operation success indication", "indication result", "writing failure indication", etc., and embodiments of the disclosure impose no limitations on the name of the second feedback information.

In some embodiments, the names of information and the like are not limited to those recorded in the embodiments, and terms such as "information", "message", "signal", "signaling", "report", "configuration", "indication", "instruction", "command", "channel", "parameter", "domain", "field", "symbol", "codebook", "codeword", "codepoint", "bit", "data", "program", and "chip" may be used interchangeably.

In some embodiments, terms such as "codebook", "codeword", and "precoding matrix" may be used interchangeably. For example, a codebook may be a collection of one or more codewords/precoding matrices.

In some embodiments, terms such as "uplink", "uplink channel", and "physical uplink" may be used interchangeably; terms such as "downlink", "downlink channel", and "physical downlink" may be used interchangeably; terms such as "side", "sidelink", "sidelink communication", "direct link", "direct communication link", and "direct link communication" may be used interchangeably.

In some embodiments, terms such as "downlink control information (DCI)", "downlink (DL) assignment", "DL DCI", "uplink (UL) grant", and "UL DCI" may be used interchangeably.

In some embodiments, terms such as "physical downlink shared channel (PDSCH)" and "DL data" may be used interchangeably; terms such as "physical uplink shared channel (PUSCH)" and "UL data" may be used interchangeably.

In some embodiments, terms such as "radio", "wireless", "radio access network (RAN)", "access network (AN)", and "RAN-based" may be used interchangeably.

In some embodiments, terms such as "moment", "time point", "time", and "time position" may be used interchangeably; terms such as "time duration", "time period", "time window", "window", and "time" may be used interchangeably.

In some embodiments, terms such as "component carrier (CC)", "cell", "frequency carrier", and "carrier frequency" may be used interchangeably.

In some embodiments, terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", and "panel" may be used interchangeably.

In some embodiments, terms such as "frame", "radio frame", "subframe", "slot", "sub-slot", "mini-slot", "symbol", and "transmission time interval (TTI)" may be used interchangeably.

In some embodiments, terms such as "obtain", "acquire", "get", "receive", "transmit", "bidirectional transmit", and "transmit and/or receive" may be used interchangeably, which may be interpreted as receiving from other entities, obtaining from protocols, acquiring from upper layers, deriving through local processing, implementing autonomously, and the like.

In some embodiments, terms such as "send", "transmit", "report", "deliver", "transfer", "bidirectional transfer", and "transmit and/or receive" may be used interchangeably.

In some embodiments, terms such as "certain", "preset", "preconfigured", "set", "indicated", "a certain", "any", and "first" may be used interchangeably. "Certain A", "preset A", "preconfigured A", "set A", "indicated A", "a certain A", "any A", and "first A" may be interpreted as A specified in advance in protocols or the like, A obtained through setting, configuration, indication or the like, or specific A, a certain A, any A, first A, etc., but are not limited thereto.

In some embodiments, a determination or judgment may be made by a value (0 or 1) represented by 1 bit, by a boolean value represented by true or false, or by comparison of numerical values (e.g., comparison with a preset value), but is not limited thereto.

In some embodiments, "being not expected to receive" may be interpreted as not receiving on a time domain resource and/or a frequency domain resource, or as not performing subsequent processing on data and the like after receiving the data and the like; "being not expected to send" may be interpreted as not sending, or as sending but not expecting a receiver to respond to a sent content.

In the embodiments of the disclosure, steps S2101 and S2102 may be performed after steps S2103 and S2104. Optionally, the first device 101 determines whether to perform step S2101 according to the first feedback information. Optionally, the first device 101 determines whether to perform step S2101 according to whether the first feedback information is received. Optionally, the first device 101 determines that the first condition is satisfied, and performs step S2101. Optionally, the first device 101 determines that the IoT device 102 permits the first operation to be performed, and performs step S2101.

The method for processing information involved in the embodiments of the disclosure may include at least one of steps S2101 to S2106. For example, step S2101 may be implemented as an independent embodiment, step S2103 may be implemented as an independent embodiment, step S2105 may be implemented as an independent embodiment, steps S2101 to S2102 may be implemented as an independent embodiment, steps S2102 to S2103 may be implemented as an independent embodiment, and steps S2104 to S2105 may be implemented as an independent embodiment, but are not limited thereto.

In some embodiments, steps S2102 to S2106 are optional, and one or more of these steps may be omitted or replaced in different embodiments.

**In** some embodiments, steps S2101 to S2102 and steps S2104 to S2106 are optional, and one or more of these steps may be omitted or replaced in different embodiments.

In some embodiments, steps S2101 to S2104 and step S2106 are optional, and one or more of these steps may be omitted or replaced in different embodiments.

FIG. 3A is a schematic flowchart of a method for processing information according to an embodiment of the disclosure. As shown in FIG. 3A, an embodiment of the disclosure relates to the method for processing information, which includes the following steps.

At step S3101, third control information is sent.

For optional implementations of step S3101, reference may be made to the optional implementations of step S2101 in FIG. 2 and other relevant parts in the embodiments related to FIG. 2, which are repeated here.

In some embodiments, the first device 101 sends the third control information to the IoT device 102, but is not limited thereto, and may also send the third control information to other entities. For example, the first device 101 may broadcast the third control information, and a device that monitors the third control information may determine whether to receive the third control information.

At step S3102, third feedback information is obtained.

For optional implementations of step S3102, reference may be made to the optional implementations of step S2102 in FIG. 2 and other relevant parts in the embodiments related to FIG. 2, which are not repeated here.

**In** some embodiments, the first device 101 receives the third feedback information sent by the IoT device 102, but is not limited thereto, and may also receive the third feedback information sent by other entities.

**In** some embodiments, the first device 101 obtains the third feedback information specified by a protocol.

In some embodiments, the first device 101 obtains the third feedback information from the upper layer(s).

**In** some embodiments, the first device 101 performs processing to obtain the third feedback information.

In some embodiments, step S3101 is omitted, and the first device 101 autonomously implements a function indicated by the third feedback information, or the aforesaid function is default or preset.

At step S3103, second control information is sent.

For optional implementations of step S3103, reference may be made to the optional implementations of step S2103 in FIG. 2 and other relevant parts in the embodiments related to FIG. 2, which are not repeated here.

In some embodiments, the first device 101 sends the second control information to the IoT device 102, but is not limited thereto, and may also send the second control information to other entities. For example, the first device 101 may broadcast the second control information, and a device that monitors the second control information may determine whether to receive the second control information.

At step S3104, first feedback information is obtained.

For optional implementations of step S3104, reference may be made to the optional implementations of step S2104 in FIG. 2 and other relevant parts in the embodiments related to FIG. 2, which are not repeated here.

In some embodiments, the first device 101 receives the first feedback information sent by the IoT device 102, but is not limited thereto, and may also receive the first feedback information sent by other entities.

In some embodiments, the first device 101 obtains the first feedback information specified by the protocol.

In some embodiments, the first device 101 obtains the first feedback information from the upper layer(s).

In some embodiments, the first device 101 performs processing to obtain the first feedback information.

In some embodiments, step S3104 is omitted, and the first device 101 autonomously implements a function indicated by the first feedback information, or the aforesaid function is default or preset.

At step S3105, first control information is sent.

For optional implementations of step S3105, reference may be made to the optional implementations of step S2105 in FIG. 2 and other relevant parts in the embodiments related to FIG. 2, which are not repeated here.

In some embodiments, the first device 101 sends the first control information to the IoT device 102, but is not limited thereto, and may also send the first control information to other entities. For example, the first device 101 may broadcast the first control information, and a device that monitors the first control information may determine whether to receive the first control information.

At step S3106, second feedback information is obtained.

For optional implementations of step S3106, reference may be made to the optional implementations of step S2106 in FIG. 2 and other relevant parts in the embodiments related to FIG. 2, which are not repeated here.

In some embodiments, the first device 101 receives the second feedback information sent by the IoT device 102, but is not limited thereto, and may also receive the second feedback information sent by other entities.

In some embodiments, the first device 101 obtains the second feedback information specified by the protocol.

In some embodiments, the first device 101 obtains the second feedback information from the upper layer(s).

In some embodiments, the first device 101 performs processing to obtain the second feedback information.

In some embodiments, step S3106 is omitted, and the first device 101 autonomously implements a function indicated by the second feedback information, or the aforesaid function is default or preset.

In the embodiments of the disclosure, the performing of the first operation may be dominated by the IoT device 102. The first device 101 may performing the first operation via the first control information only when the identity verification performed by the IoT device 102 on the first device 101 passes and the IoT device 102 determines to permit the first device 101 to perform the first operation.

In some embodiments, whether the first device 101 sends the second control information in step S3103 may be determined based on the third feedback information. For example, when after obtaining the third feedback information, the first device 101 determines, based on the third feedback information, that the identity verification on the first device 101 by the IoT device 102 does not pass, the first device 101 may not perform step S3103 and subsequent steps.

In some embodiments, whether the first device 101 sends the first control information in step S3105 may be determined based on the first feedback information. For example, when after obtaining the first feedback information, the first device 101 determines, based on the first feedback information, that the IoT device 102 does not permit the first operation to be performed, the first device 101 may not perform step S3105 and subsequent steps.

The method for processing information involved in the embodiments of the disclosure may include at least one of steps S3101 to S3106. For example, step S3101 may be implemented as an independent embodiment, step S3103 may be implemented as an independent embodiment, step S3105 may be implemented as an independent embodiment, steps S3101 to S3102 may be implemented as an independent embodiment, steps S3102 to S3103 may be implemented as an independent embodiment, and steps S3104 to S3105 may be implemented as an independent embodiment, but are not limited thereto.

In some embodiments, steps S3102 to S3106 are optional, and one or more of these steps may be omitted or replaced in different embodiments.

In some embodiments, steps S3101 to S3102 and steps S3104 to S3106 are optional, and one or more of these steps may be omitted or replaced in different embodiments.

In some embodiments, steps S3101 to S3104 and step S3106 are optional, and one or more of these steps may be omitted or replaced in different embodiments.

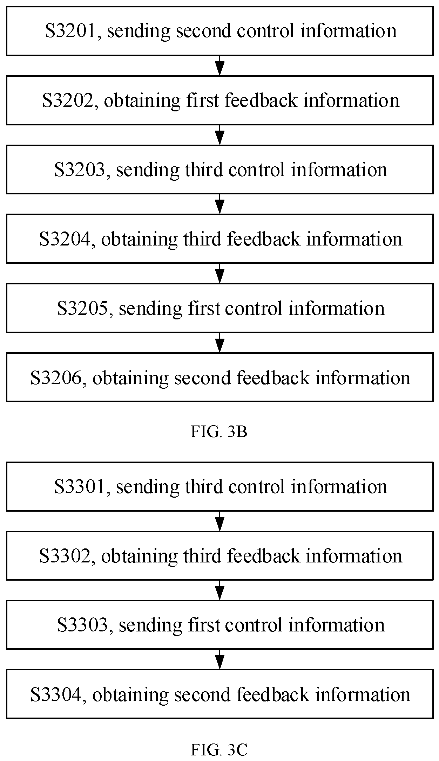

FIG. 3B is a schematic flowchart of a method for processing information according to an embodiment of the disclosure. As shown in FIG. 3B, an embodiment of the disclosure relates to the method for processing information, which includes the following steps.

At step S3201, second control information is sent.

For optional implementations of step S3201, reference may be made to the optional implementations of step S2103 in FIG. 2 and step S3103 in FIG. 3A, as well as other relevant parts in the embodiments related to FIG. 2 and FIG. 3A, which are not repeated here.

At step S3202, first feedback information is obtained.

For optional implementations of step S3202, reference may be made to the optional implementations of step S2104 in FIG. 2 and step S3104 in FIG. 3A, as well as other relevant parts in the embodiments related to FIG. 2 and FIG. 3A, which are not repeated here.

At step S3203, the third control information is sent.

For optional implementations of step S3203, reference may be made to the optional implementations of step S2101 in FIG. 2 and step S3101 in FIG. 3A, as well as other relevant parts in the embodiments related to FIG. 2 and FIG. 3A, which are not repeated here.

At step S3204, third feedback information is obtained.

For optional implementations of step S3204, reference may be made to the optional implementations of step S2102 in FIG. 2 and step S3102 in FIG. 3A, as well as other relevant parts in the embodiments related to FIG. 2 and FIG. 3A, which are not repeated here.

At step S3205, first control information is sent.

For optional implementations of step S3205, reference may be made to the optional implementations of step S2105 in FIG. 2 and step S3105 in FIG. 3A, as well as other relevant parts in the embodiments related to FIG. 2 and FIG. 3A, which are not repeated here.

At step S3206, second feedback information is obtained.

For optional implementations of step S3206, reference may be made to the optional implementations of step S2106 in FIG. 2 and step S3106 in FIG. 3A, as well as other relevant parts in the embodiments related to FIG. 2 and FIG. 3A, which are not repeated here.

In the embodiments of the disclosure, the performing of the first operation may be dominated by the IoT device 102. The first device 101 may perform the first operation based on the first control information only when the IoT device 102 determines to permits the first device 101 to perform the first operation and the identity verification on the first device 101 passes.

In some embodiments, whether the first device 101 sends the third control information in step S3103 may be determined based on the first feedback information. For example, when after obtaining the first feedback information, the first device 101 determines, based on the first feedback information, that the IoT device 102 does not permit the first operation to be performed, the first device 101 may not perform step S3103 and subsequent steps.

In some embodiments, whether the first device 101 sends the first control information in step S3205 may be determined based on the second feedback information. For example, when after obtaining the second feedback information, the first device 101 determines, based on the second feedback information, that the identity verification performed by the IoT device 102 on the first device 101 does not pass, the first device 101 may not perform step S3205 and subsequent steps.

The method for processing information involved in the embodiments of the disclosure may include at least one of steps S3201 to S3206. For example, step S3201 may be implemented as an independent embodiment, step S3203 may be implemented as an independent embodiment, step S3205 may be implemented as an independent embodiment, steps S3201 to S3202 may be implemented as an independent embodiment, steps S3202 to S3203 may be implemented as an independent embodiment, and steps S3204 to S3205 may be implemented as an independent embodiment, but are not limited thereto.

In some embodiments, steps S3202 to S3206 are optional, and one or more of these steps may be omitted or replaced in different embodiments.

In some embodiments, steps S3201 to S3202 and steps S3204 to S3206 are optional, and one or more of these steps may be omitted or replaced in different embodiments.

In some embodiments, steps S3201 to S3204 and step S3206 are optional, and one or more of these steps may be omitted or replaced in different embodiments.

FIG. 3C is a schematic flowchart of a method for processing information according to an embodiment of the disclosure. As shown in FIG. 3C, an embodiment of the disclosure relates to the method for processing information, which includes the following steps.

At step S3301, third control information is sent.

For optional implementations of step S3301, reference may be made to the optional implementations of step S2101 in FIG. 2, step S3101 in FIG. 3A and step S3203 in FIG. 3B, as well as other relevant parts in the embodiments related to FIG. 2, FIG. 3A and FIG. 3B, which are not repeated here.

At step S3302, third feedback information is obtained.

For optional implementations of step S3302, reference may be made to the optional implementations of step S2102 in FIG. 2, step S3102 in FIG. 3A and step S3204 in FIG. 3B, as well as other relevant parts in the embodiments related to FIG. 2, FIG. 3A and FIG. 3B, which are not repeated here.

At step S3303, first control information is sent.

For optional implementations of step S3303, reference may be made to the optional implementations of step S2105 in FIG. 2, step S3105 in FIG. 3A and step S3205 in FIG. 3B, as well as other relevant parts in the embodiments related to FIG. 2, FIG. 3A and FIG. 3B, which are not repeated here.

At step S3304, second feedback information is sent.

For optional implementations of step S3304, reference may be made to the optional implementations of step S2105 in FIG. 2, step S3106 in FIG. 3A and step S3206 in FIG. 3B, as well as other relevant parts in the embodiments related to FIG. 2, FIG. 3A and FIG. 3B, which are not repeated here.

In the embodiments of the disclosure, the performing of the first operation may be dominated by the loT device 102. The first device 101 may perform the first operation based on the first control information only when the IoT device 102 determines to permits the first device 101 to perform the first operation and the identity verification on the first device 101 passes.

The method for processing information involved in the embodiments of the disclosure may include at least one of steps S3301 to S3304. For example, step S3301 may be implemented as an independent embodiment, step S3303 may be implemented as an independent embodiment, steps S3301 to S3302 may be implemented as an independent embodiment, steps S3302 to S3304 may be implemented as an independent embodiment, and steps S3301 to S3303 may be implemented as an independent embodiment, but are not limited thereto.

In some embodiments, steps S3302 to S3304 are optional, and one or more of these steps may be omitted or replaced in different embodiments.

In some embodiments, steps S3301 to S3302 and step S3304 are optional, and one or more of these steps may be omitted or replaced in different embodiments.

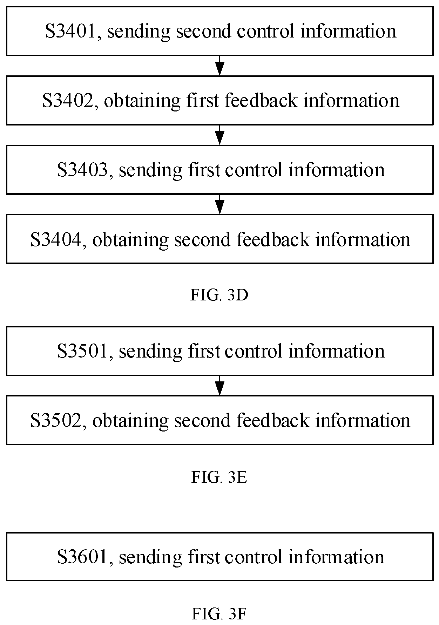

FIG. 3D is a schematic flowchart of a method for processing information according to an embodiment of the disclosure. As shown in FIG. 3D, an embodiment of the disclosure relates to the method for processing information, which includes the following steps.

At step S3401, second control information is sent.

For optional implementations of step S3401, reference may be made to the optional implementations of step S2103 in FIG. 2, step S3103 in FIG. 3A and step S3201 in FIG. 3B, as well as other relevant parts in the embodiments related to FIG. 2, FIG. 3A, FIG. 3B and FIG. 3C, which are not repeated here.

At step S3402, first feedback information is obtained.

For optional implementations of step S3402, reference may be made to the optional implementations of step S2104 in FIG. 2, step S3104 in FIG. 3A and step S3202 in FIG. 3B, as well as other relevant parts in the embodiments related to FIG. 2, FIG. 3A, FIG. 3B and FIG. 3C, which are not repeated here.

At step S3403, first control information is sent.

For optional implementations of step S3403, reference may be made to the optional implementations of step S2105 in FIG. 2, step S3105 in FIG. 3A, step S3205 in FIG. 3B and step S3303 in FIG. 3C, as well as other relevant parts in the embodiments related to FIG. 2, FIG. 3A, FIG. 3B and FIG. 3C, which are not repeated here.

At step S3404, second feedback information is obtained.

For optional implementations of step S3404, reference may be made to the optional implementations of step S2106 in FIG. 2, step S3106 in FIG. 3A, step S3206 in FIG. 3B and step S3304 in FIG. 3C, as well as other relevant parts in the embodiments related to FIG. 2, FIG. 3A, FIG. 3B and FIG. 3C, which are not repeated here.

In the embodiments of the disclosure, the performing of the first operation may be dominated by the IoT device 102. The first device 101 may perform the first operation based on the first control information only when the IoT device 102 determines to permits the first device 101 to perform the first operation.

The method for processing information involved in the embodiments of the disclosure may include at least one of steps S3401 to S3404. For example, step S3401 may be implemented as an independent embodiment, step S3403 may be implemented as an independent embodiment, steps S3401 to S3402 may be implemented as an independent embodiment, steps S3402 to S3404 may be implemented as an independent embodiment, and steps S3401 to S3403 may be implemented as an independent embodiment, but are not limited thereto.

In some embodiments, steps S3402 to S3404 are optional, and one or more of these steps may be omitted or replaced in different embodiments.

In some embodiments, steps S3401 to S3402 and step S3404 are optional, and one or more of these steps may be omitted or replaced in different embodiments.

FIG. 3E is a schematic flowchart of a method for processing information according to an embodiment of the disclosure. As shown in FIG. 3E, an embodiment of the disclosure relates to the method for processing information, which includes the following steps.

At step S3501, first control information is sent.

For optional implementations of step S3501, reference may be made to the optional implementations of step S2105 in FIG. 2, step S3105 in FIG. 3A, step S3205 in FIG. 3B, step S3303 in FIG. 3C and step S3403 in FIG. 3D, as well as other relevant parts in the embodiments related to FIG. 2, FIG. 3A, FIG. 3B, FIG. 3C and FIG. 3D, which are not repeated here.

At step S3502, second feedback information is obtained.

For optional implementations of step S3502, reference may be made to the optional implementations of step S2106 in FIG. 2, step S3106 in FIG. 3A, step S3206 in FIG. 3B, step S3304 in FIG. 3C and step S3404 in FIG. 3D, as well as other relevant parts in the embodiments related to FIG. 2, FIG. 3A, FIG. 3B, FIG. 3C and FIG. 3D, which are not repeated here.

In the embodiments of the disclosure, the performing of the first operation may be dominated by the IoT device 102. The first device 101 may directly instruct the IoT device 102 to perform the first operation without performing the identity verification with the IoT device 102 or confirming whether the IoT device 102 permits.

The method for processing information involved in the embodiments of the disclosure may include at least one of steps S3501 to S3502. For example, step S3501 may be implemented as an independent embodiment, and step S3502 may be implemented as an independent embodiment.

In some embodiments, step S3502 is optional, and one or more of these steps may be omitted or replaced in different embodiments.

FIG. 3F is a schematic flowchart of a method for processing information according to an embodiment of the disclosure. As shown in FIG. 3F, an embodiment of the disclosure relates to the method for processing information, which includes the following steps.

At step S3601, first control information is sent.

For optional implementations of step S3601, reference may be made to the optional implementations of step S2105 in FIG. 2, step S3105 in FIG. 3A, step S3205 in FIG. 3B, step S3303 in FIG. 3C, step S3403 in FIG. 3D and step S3501 in FIG. 3E, as well as other relevant parts in the embodiments related to FIG. 2, FIG. 3A, FIG. 3B, FIG. 3C, FIG. 3D and FIG. 3E, which are not repeated here.

In some embodiments, the performing of the first operation may be dominated by the IoT device 102. The first device 101 may directly instruct the IoT device 102 to perform the first operation without performing the identity verification with the IoT device 102 or confirming whether the IoT device 102 permits.

In some embodiments, the first device 101 may be any one of: the access network device, the core network device, the terminal, the RF reader/writer, the intermediate node device, and the auxiliary node device.

In some embodiments, the method includes: before sending the first control information,
sending second control information, in which the second control information is configured to request the first operation to be performed, and
the first operation is performed in a case where the IoT device 102 permits the first operation to be performed on first information.

In some embodiments, the method further includes:
receiving first feedback information,
in which the first feedback information indicates that the IoT device 102 permits the first operation to be performed; or
the first feedback information indicates that the IoT device 102 does not permit the first operation to be performed.

In some embodiments, sending the first control information to the IoT device 102 includes:
determining that a first condition is satisfied; and sending the first control information to the IoT device, in which the first condition includes at least one of:
a condition where the first device receives the first feedback information, and the first feedback information indicates that the IoT device permits the first operation to be performed;
a condition where the first device does not receive the first feedback information within a first time duration; or
a condition where the first device receives the first feedback information within a second time duration.

In some embodiments, the method further includes: before sending the first control information,
sending third control information, in which the third control information is configured to instruct the IoT device 102 to perform an identity verification on the first device 101; and
the first operation is performed in a case where the identity verification is passed.

In some embodiments, the method further includes:
receiving third feedback information,
in which the third feedback information indicates that the identity verification performed by the IoT device 102 on the first device 101 succeeds; or
the third feedback information indicates that the identity verification performed by the IoT device 102 on the first device 101 fails.

In some embodiments, sending the first control information to the IoT device 102 includes:
determining that a second condition is satisfied, and sending the first control information, in which the second condition includes at least one of:
a condition where the first device receives the third feedback information, in which the third feedback information indicates that the identity verification performed by the IoT device 102 on the first device 101 succeeds;
a condition where the first device does not receive the third feedback information within a third time duration; or
a condition where the first device receives the third feedback information within a fourth time duration.

In some embodiments, the method further includes:
receiving second feedback information,
in which the second feedback information indicates that the IoT device 102 succeeds in performing the first operation; or
the second feedback information indicates that the IoT device 102 fails to perform the first operation.

In some embodiments, the method further includes:
determining that a third condition is satisfied, and continuing to send the first control information, in which the third condition includes at least one of:
a condition where the first device receives the second feedback information, in which the second feedback information indicates that the IoT device 102 succeeds in performing the first operation;
a condition where the first device receives the second feedback information, in which the second feedback information indicates that the IoT device 102 does not fail in performing the first operation;
a condition where the first device does not receive the second feedback information within a fifth time duration; or
a condition where the first device receives the second feedback information within a sixth time duration.

In some embodiments, the first control information is configured to instruct the IoT device 102 to perform the first operation on first information, and the first information includes at least one code domain in encoding information of the IoT device 102.

In some embodiments, the encoding information indicates status information of the IoT device 102, and the status information includes environmental information and self-information of the IoT device 102.

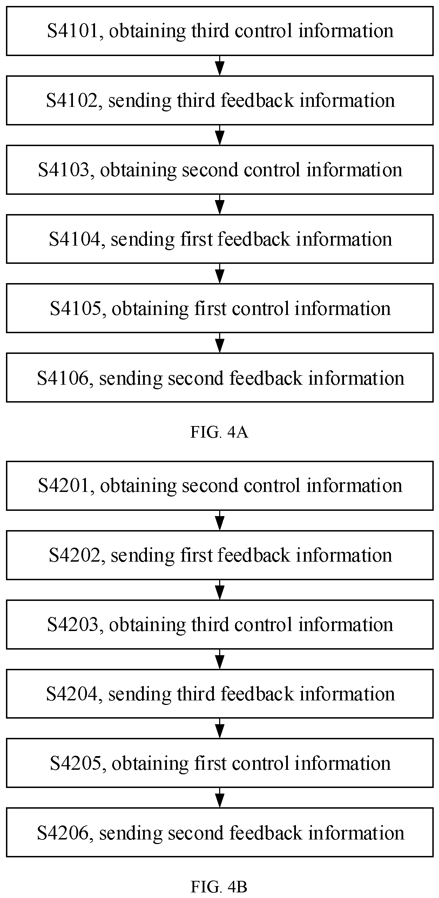

FIG. 4A is a schematic flowchart of a method for processing information according to an embodiment of the disclosure. As shown in FIG. 4A, an embodiment of the disclosure relates to the method for processing information, which includes the following steps.

At step S4101, third control information is obtained.

For optional implementations of step S4101, reference may be made to the optional implementations of step S2101 in FIG. 2 and other relevant parts in the embodiments related to FIG. 2, which are not repeated here.

In some embodiments, the IoT device 102 obtains the third control information specified by the protocol.

In some embodiments, the IoT device 102 obtains the third control information from the upper layer(s).

In some embodiments, the IoT device 102 performs processing to obtain the third control information.

In some embodiments, step S4101 is omitted, and the IoT device 102 autonomously implements the function indicated by the third control information, or the aforesaid function is default or preset.

At step S4102, third feedback information is sent.

For optional implementations of step S4102, reference may be made to the optional implementations of step S2102 in FIG. 2 and other relevant parts in the embodiments related to FIG. 2, which are not repeated here.

In some embodiments, the IoT device 102 sends the third feedback information to the first device 101, but is not limited thereto, and may also send the third feedback information to other entities. For example, the IoT device 102 may broadcast the third feedback information, and a device that monitors the third feedback information may determine whether to receive the third feedback information.

At step S4103, second control information is obtained.

For optional implementations of step S4103, reference may be made to the optional implementations of step S2103 in FIG. 2 and other relevant parts in the embodiments related to FIG. 2, which are not repeated here.

In some embodiments, the IoT device 102 obtains the second control information specified by the protocol.

In some embodiments, the IoT device 102 obtains the second control information from the upper layer(s).

In some embodiments, the IoT device 102 performs processing to obtain the second control information.

In some embodiments, step S4103 is omitted, and the IoT device 102 autonomously implements the function indicated by the second control information, or the aforesaid function is default or preset.

At step S4104, first feedback information is sent.

For optional implementations of step S4104, reference may be made to the optional implementations of step S2104 in FIG. 2 and other relevant parts in the embodiments related to FIG. 2, which are not repeated here.

In some embodiments, the IoT device 102 sends the first feedback information to the first device 101, but is not limited thereto, and may also send the first feedback information to other entities. For example, the IoT device 102 may broadcast the first feedback information, and a device that monitors the first feedback information may determine whether to receive the first feedback information.

At step S4105, first control information is obtained.

For optional implementations of step S4105, reference may be made to the optional implementations of step S2105 in FIG. 2 and other relevant parts in the embodiments related to FIG. 2, which are not repeated here.

In some embodiments, the IoT device 102 obtains the first control information specified by the protocol.

In some embodiments, the IoT device 102 obtains the first control information from the upper layer(s).

In some embodiments, the IoT device 102 performs processing to obtain the first control information.

In some embodiments, step S4105 is omitted, and the IoT device 102 autonomously implements the function indicated by the first control information, or the aforesaid function is default or preset.

At step S4106, second feedback information is sent.

For optional implementations of step S4106, reference may be made to the optional implementations of step S2106 in FIG. 2 and other relevant parts in the embodiments related to FIG. 2, which are not repeated here.

In some embodiments, the IoT device 102 sends the second feedback information to the first device 101, but is not limited thereto, and may also send the second feedback information to other entities. For example, the IoT device 102 may broadcast the second feedback information, and a device that monitors the second feedback information may determine whether to receive the second feedback information.

In the embodiments of the disclosure, the performing of the first operation may be dominated by the IoT device 102. The first device 101 may perform the first operation via the first control information only when the identity verification performed by the IoT device 102 on the first device 101 passes and the IoT device 102 determines to permit the first device 101 to perform the first operation.

In some embodiments, whether the IoT device 102 receives or expects to receive the second control information in step S4103 may be determined based on the third feedback information. For example, when the IoT device 102 sends, in step S4102, the third feedback information indicating that the identity verification performed by the IoT device 102 on the first device 101 does not pass, the IoT device 102 may not perform step S4103 and subsequent steps.

In some embodiments, whether the IoT device 102 receives or expects to receive the first control information in step S4105 may be determined based on the first feedback information. For example, when the IoT device 102 send, in step S4104, the first feedback information indicating that the IoT device 102 does not permit the first operation to be performed, the IoT device 102 may not perform step S4105 and subsequent steps.

The method for processing information involved in the embodiments of the disclosure may include at least one of steps S4101 to S4106. For example, step S4101 may be implemented as an independent embodiment, step S4103 may be implemented as an independent embodiment, step S4105 may be implemented as an independent embodiment, steps S4101 to S4102 may be implemented as an independent embodiment, steps S4102 to S4103 may be implemented as an independent embodiment, and steps S4104 to S4105 may be implemented as an independent embodiment, but are not limited thereto.

In some embodiments, steps S4102 to S4106 are optional, and one or more of these steps may be omitted or replaced in different embodiments.

In some embodiments, steps S4101 to S4102 and steps S4104 to S4106 are optional, and one or more of these steps may be omitted or replaced in different embodiments.

In some embodiments, steps S4101 to S4104 and step S4106 are optional, and one or more of these steps may be omitted or replaced in different embodiments.

FIG. 4B is a schematic flowchart of a method for processing information according to an embodiment of the disclosure. As shown in FIG. 4B, an embodiment of the disclosure relates to the method for processing information, which includes the following steps.

At step S4201, second control information is obtained.

For optional implementations of step S4201, reference may be made to the optional implementations of step S2103 in FIG. 2 and step S4103 in FIG. 4A, as well as other relevant parts in the embodiments related to FIG. 2 and FIG. 4A, which are not repeated here.

At step S4202, first feedback information is sent.

For optional implementations of step S4202, reference may be made to the optional implementations of step S2104 in FIG. 2 and step S4104 in FIG. 4A, as well as other relevant parts in the embodiments related to FIG. 2 and FIG. 4A, which are not repeated here.

At step S4203, the third control information is obtained.

For optional implementations of step S4203, reference may be made to the optional implementations of step S2101 in FIG. 2 and step S4101 in FIG. 4A, as well as other relevant parts in the embodiments related to FIG. 2 and FIG. 4A, which are not repeated here.

At step S4204, third feedback information is sent.

For optional implementations of step S4204, reference may be made to the optional implementations of step S2102 in FIG. 2 and step S4102 in FIG. 4A, as well as other relevant parts in the embodiments related to FIG. 2 and FIG. 4A, which are not repeated here.

At step S4205, first control information is obtained.

For optional implementations of step S4205, reference may be made to the optional implementations of step S2105 in FIG. 2 and step S4105 in FIG. 4A, as well as other relevant parts in the embodiments related to FIG. 2 and FIG. 4A, which are not repeated here.

At step S4206, second feedback information is sent.

For optional implementations of step S4206, reference may be made to the optional implementations of step S2106 in FIG. 2 and step S4106 in FIG. 4A, as well as other relevant parts in the embodiments related to FIG. 2 and FIG. 4A, which are not repeated here.

In the embodiments of the disclosure, the performing of the first operation may be dominated by the IoT device 102. The first device 101 may perform the first operation based on the first control information only when the IoT device 102 determines to permit the first device 101 to perform the first operation and the identity verification on the first device 101 passes.

In some embodiments, whether the IoT device 102 receives or expects to receive the third control information in step S4203 may be determined based on the first feedback information. For example, when the IoT device 102 sends, in step S4202, the first feedback information indicating that the IoT device 102 does not permit the first operation to be performed, the IoT device 102 may not perform step S4203 and subsequent steps.

In some embodiments, whether the IoT device 102 receives or expects to receive the first control information in step S4205 may be determined based on the third feedback information. For example, when the IoT device 102 sends, in step S4204, the third feedback information indicating that the identity verification performed by the IoT device 102 on the first device 101 does not pass, the IoT device 102 may not perform step S4205 and subsequent steps.

The method for processing information involved in the embodiments of the disclosure may include at least one of steps S4201 to S4206. For example, step S4201 may be implemented as an independent embodiment, step S4203 may be implemented as an independent embodiment, step S4205 may be implemented as an independent embodiment, steps S4201 to S4202 may be implemented as an independent embodiment, steps S4202 to S4203 may be implemented as an independent embodiment, and steps S4204 to S4205 may be implemented as an independent embodiment, but are not limited thereto.

In some embodiments, steps S4202 to S4206 are optional, and one or more of these steps may be omitted or replaced in different embodiments.

In some embodiments, steps S4201 to S4202 and steps S4204 to S4206 are optional, and one or more of these steps may be omitted or replaced in different embodiments.

In some embodiments, steps S4201 to S4204 and step S4206 are optional, and one or more of these steps may be omitted or replaced in different embodiments.

FIG. 4C is a schematic flowchart of a method for processing information according to an embodiment of the disclosure. As shown in FIG. 4C, an embodiment of the disclosure relates to the method for processing information, which includes the following steps.

At step S4301, third control information is obtained.

For optional implementations of step S4301, reference may be made to the optional implementations of step S2101 in FIG. 2, step S4101 in FIG. 4A and step S4203 in FIG. 4B, as well as other relevant parts in the embodiments related to FIG. 2, FIG. 4A and FIG. 4B, which are not repeated here.

At step S4302, third feedback information is sent.

For optional implementations of step S4302, reference may be made to the optional implementations of step S2102 in FIG. 2, step S4102 in FIG. 4A and step S4204 in FIG. 4B, as well as other relevant parts in the embodiments related to FIG. 2, FIG. 4A and FIG. 4B, which are not repeated here.

At step S4303, first control information is sent.

For optional implementations of step S4303, reference may be made to the optional implementations of step S2105 in FIG. 2, step S4105 in FIG. 4A and step S4205 in FIG. 4B, as well as other relevant parts in the embodiments related to FIG. 2, FIG. 4A and FIG. 4B, which are not repeated here.

At step S4304, second feedback information is sent.

For optional implementations of step S4304, reference may be made to the optional implementations of step S2106 in FIG. 2, step S4106 in FIG. 4A and step S4206 in FIG. 4B, as well as other relevant parts in the embodiments related to FIG. 2, FIG. 4A and FIG. 4B, which are not repeated here.

In the embodiments of the disclosure, the performing of the first operation may be dominated by the IoT device 102. The first device 101 may perform the first operation via the first control information only when the identity verification performed by the IoT device 102 on the first device 101 passes.

The method for processing information involved in the embodiments of the disclosure may include at least one of steps S4301 to S4304. For example, step S4301 may be implemented as an independent embodiment, step S4303 may be implemented as an independent embodiment, steps S4301 to S4302 may be implemented as an independent embodiment, steps S4303 to S4304 may be implemented as an independent embodiment, and steps S4301 to S4304 may be implemented as an independent embodiment, but are not limited thereto.

In some embodiments, steps S4302 to S4304 are optional, and one or more of these steps may be omitted or replaced in different embodiments.

In some embodiments, steps S4301 to S4302 and step S4304 are optional, and one or more of these steps may be omitted or replaced in different embodiments.

FIG. 4D is a schematic flowchart of a method for processing information according to an embodiment of the disclosure. As shown in FIG. 4D, an embodiment of the disclosure relates to the method for processing information, which includes the following steps.

At step S4401, second control information is obtained.

For optional implementations of step S4401, reference may be made to the optional implementations of step S2103 in FIG. 2, step S4103 in FIG. 4A and step S4201 in FIG. 4B, as well as other relevant parts in the embodiments related to FIG. 2, FIG. 4A, FIG. 4B and FIG. 4C, which are not repeated here.

At step S4402, first feedback information is sent.

For optional implementations of step S4402, reference may be made to the optional implementations of step S2104 in FIG. 2, step S4104 in FIG. 4A and step S4202 in FIG. 4B, as well as other relevant parts in the embodiments related to FIG. 2, FIG. 4A, FIG. 4B and FIG. 4C, which are not repeated here.

At step S4403, first control information is obtained.

For optional implementations of step S4403, reference may be made to the optional implementations of step S2105 in FIG. 2, step S4105 in FIG. 4A, step S4205 in FIG. 4B and step S4303 in FIG. 4C, as well as other relevant parts in the embodiments related to FIG. 2, FIG. 4A, FIG. 4B and FIG. 4C, which are not repeated here.

At step S4404, second feedback information is sent.

For optional implementations of step S4404, reference may be made to the optional implementations of step S2106 in FIG. 2, step S4106 in FIG. 4A, step S4206 in FIG. 4B and step S4304 in FIG. 4C, as well as other relevant parts in the embodiments related to FIG. 2, FIG. 4A, FIG. 4B and FIG. 4C, which are not repeated here.

In the embodiments of the disclosure, the performing of the first operation may be dominated by the IoT device 102. The first device 101 may perform the first operation via the first control information only when the IoT device 102 determines to permit the first device 101 to perform the first operation.

The method for processing information involved in the embodiments of the disclosure may include at least one of steps S4401 to S4404. For example, step S4401 may be implemented as an independent embodiment, step S4403 may be implemented as an independent embodiment, steps S4401 to S4402 may be implemented as an independent embodiment, steps S4402 to S4404 may be implemented as an independent embodiment, and steps S4401 to S4403 may be implemented as an independent embodiment, but are not limited thereto.

In some embodiments, steps S4402 to S4404 are optional, and one or more of these steps may be omitted or replaced in different embodiments.

In some embodiments, steps S4401 to S4402 and step S4404 are optional, and one or more of these steps may be omitted or replaced in different embodiments.

FIG. 4E is a schematic flowchart of a method for processing information according to an embodiment of the disclosure. As shown in FIG. 4E, an embodiment of the disclosure relates to the method for processing information, which includes the following steps.

At step S4501, first control information is obtained.

For optional implementations of step S4501, reference may be made to the optional implementations of step S2105 in FIG. 2, step S4105 in FIG. 4A, step S4205 in FIG. 4B, step S4303 in FIG. 4C and step S4403 in FIG. 4D, as well as other relevant parts in the embodiments related to FIG. 2, FIG. 4A, FIG. 4B, FIG. 4C and FIG. 4D, which are not repeated here.

At step S4502, second feedback information is sent.

For optional implementations of step S4502, reference may be made to the optional implementations of step S2106 in FIG. 2, step S4106 in FIG. 4A, step S4206 in FIG. 4B, step S4304 in FIG. 4C and step S4404 in FIG. 4D, as well as other relevant parts in the embodiments related to FIG. 2, FIG. 4A, FIG. 4B, FIG. 4C and FIG. 4D, which are not repeated here.

In some embodiments, the performing of the first operation may be dominated by the IoT device 102. The first device 101 may directly instruct the IoT device 102 to perform the first operation without performing the identity verification with the IoT device 102 or confirming whether the IoT device 102 permits.

The method for processing information involved in the embodiments of the disclosure may include at least one of steps S4501 to S4502. For example, step S4501 may be implemented as an independent embodiment, and step S4502 may be implemented as an independent embodiment.

In some embodiments, step S4502 is optional, and one or more of these steps may be omitted or replaced in different embodiments.

FIG. 4F is a schematic flowchart of a method for processing information according to an embodiment of the disclosure. As shown in FIG. 4F, an embodiment of the disclosure relates to the method for processing information, which includes the following steps.

At step S4601, first control information is obtained.

For optional implementations of step S4601, reference may be made to the optional implementations of step S2105 in FIG. 2, step S4105 in FIG. 4A, step S4205 in FIG. 4B, step S4303 in FIG. 4C, step S4403 in FIG. 4D and step S4501 in FIG. 4E, as well as other relevant parts in the embodiments related to FIG. 2, FIG. 4A, FIG. 4B, FIG. 4C, FIG. 4D and FIG. 4E, which are not repeated here.

In some embodiments, the performing of the first operation may be dominated by the IoT device 102. The first device 101 may directly instruct the IoT device 102 to perform the first operation without performing the identity verification with the IoT device 102 or confirming whether the IoT device 102 permits.

In some embodiments, the first device 101 may be any one of: the access network device, the core network device, the terminal, the RF reader/writer, the intermediate node device, and the auxiliary node device.

In some embodiments, the method further includes: before receiving the first control information,
receiving second control information, in which the second control information is configured to request the first operation to be performed, and
the first operation is performed in a case where the IoT device 102 permits the first operation to be performed.

In some embodiments, the method further includes:
sending first feedback information,
in which the first feedback information indicates that the IoT device permits the first operation to be performed; or
the first feedback information indicates that the IoT device does not permit the first operation to be performed.

In some embodiments, the first control information is sent in a case where the first device 101 determines that a first condition is satisfied, and the first condition includes at least one of:
a condition where the first device 101 receives the first feedback information, and the first feedback information indicates that the IoT device 102 permits the first operation to be performed;
a condition where the first device 101 does not receive the first feedback information within a first time duration; or
a condition where the first device 101 receives the first feedback information within a second time duration.

In some embodiments, the method further includes: before receiving the first control information.
receiving third control information, in which the third control information is configured to instruct the IoT device 102 to perform an identity verification on the first device 101, and
the first operation is performed in a case where the identity verification is passed.

In some embodiments, the method further includes:
sending third feedback information,
in which the third feedback information indicates that the identity verification performed by the IoT device 102 on the first device 101 succeeds; or
the third feedback information indicates that the identity verification performed by the IoT device 102 on the first device 101 fails.

In some embodiments, the first control information is sent in a case where the first device 101 determines that a second condition is satisfied, and the second condition includes at least one of:
a condition where the first device 101 receives the third feedback information, in which the third feedback information indicates that the identity verification performed by the IoT device 102 on the first device 101 succeeds;
a condition where the first device 101 does not receive the third feedback information within a third time duration; or
a condition where the first device 101 receives the third feedback information within a fourth time duration.

In some embodiments, the method further includes:
sending second feedback information,
in which the second feedback information indicates that the IoT device 102 succeeds in performing the first operation; or
the second feedback information indicates that the IoT device 102 fails to perform the first operation.

In some embodiments, the method further includes:
maintaining the receiving of the first control information, in which the first control information is sent by the first device 101 continuously in a case where the first device determines that a third condition is satisfied, and the third condition includes at least one of:
a condition where the first device 101 receives the second feedback information, in which the second feedback information indicates that the IoT device 102 succeeds in performing the first operation;
a condition where the first device 101 receives the second feedback information, in which the second feedback information indicates that the IoT device 102 does not fail in performing the first operation;
a condition where the first device 101 does not receive the second feedback information within a fifth time duration; or
a condition where the first device 101 receives the second feedback information within a sixth time duration.

In some embodiments, the first control information is configured to instruct the IoT device 102 to perform the first operation on first information, and the first information includes at least one code domain in encoding information of the IoT device 102.

In some embodiments, the encoding information indicates status information of the IoT device 102, and the status information includes environmental information and self-information of the IoT device 102.

FIG. 5 is an interaction diagram of a method for processing information according to an embodiment of the disclosure. As shown in FIG. 4F, an embodiment of the disclosure relates to the method for processing information, which includes the following steps.

At step S5101, the first device 101 sends the first control information to the IoT device 102.

For optional implementations of step S5101, reference may be made to the optional implementations of step S2105 in FIG. 2, step S3105 in FIG. 3A, step S3205 in FIG. 3B, step S3303 in FIG. 3C, step S3403 in FIG. 3D, step S3501 in FIG. 3E, step S3601 in FIG. 3F, step S4105 in FIG. 4A, step S4205 in FIG. 4B, step S4303 in FIG. 4C, step S4403 in FIG. 4D, step S4501 in FIG. 4E and step S4601 in FIG. 4F, as well as other relevant parts in the embodiments related to FIG. 2, FIG. 3A, FIG. 3B, FIG. 3C, FIG. 3D, FIG. 3E, FIG. 3F, FIG. 4A, FIG. 4B, FIG. 4C, FIG. 4D, FIG. 4E and FIG. 4F, which are not repeated here.

FIG. 6A is a schematic flowchart of a method for processing information according to an embodiment of the disclosure. As shown in FIG. 6A, an embodiment of the disclosure relates to the method for processing information, which includes the following steps.

At step S6101, the first device confirms to enter/write/rewrite data information into the A-IoT device.

It is determined that the data information includes, but is not limited to, at least one code domain in the ambient-loT encoding.

In some embodiments, the first device sends the first control information to the A-IoT device, where the first control information is configured for the first device to enter/write/rewrite the data information into the A-IoT device.

In some embodiments, the first device sends the second control information to the A-IoT device, where the second control information is configured for the first device to request the A-IoT device to permit entering/writing/rewriting the data information.

In some embodiments, the first device sends the third control information to the A-IoT device, where the third control information includes the identity verification code of the first device.

In some embodiments, the first device receives the first feedback information from the A-IoT device, where the first feedback information is configured for the A-IoT device to feed back to the first device that the A-IoT device permits the first device to enter/write/rewrite the data information, or that the A-IoT device does not permit the first device to enter/write/rewrite the data information, or whether the A-IoT device permits the first device to enter/write/rewrite the data information.

In some embodiments, the first device receives the third feedback information from the A-IoT device, where the third feedback information is configured for the A-IoT device to feed back to the first device that the identity verification of the first device is successful, or that the identity verification of the first device is unsuccessful, or whether the identity verification of the first device is successful.

In some embodiments, the first device sends the first control information to the A-IoT device in a case where at least one of the following conditions is satisfied, where the first control information is configured for the first device to enter/write/rewrite the data information into the A-IoT device:
a condition where the first device receives the first feedback information from the A-IoT device, and the first feedback information indicates that the first device is permitted to enter/write/rewrite the data information; a condition where the first device does not receive the first feedback information from the A-IoT device within the first time duration;
a condition where the first device receives the first feedback information from the A-IoT device within the first time duration;
a condition where the first device receives the third feedback information from the A-IoT device, and the third feedback information indicates that the identity verification of the first device is successful;
a condition where the first device does not receive the third feedback information from the A-IoT device within the third time duration; or
a condition where the first device receives the third feedback information from the A-IoT device within the third time duration.

In some embodiments, the first time duration and the third time duration are predefined by the protocol.

In some embodiments, the first device receives the second feedback information from the A-IoT device, where the second feedback information is configured for the A-IoT device to feed back to the first device that the first device succeeds in entering/writing/rewriting the data information into the A-IoT device, or that the first device fails to enter/write/rewrite the data information into the A-IoT device, or whether the first device succeeds in entering/writing/rewriting the data information into the A-IoT device.

In some embodiments, the first device continues to send the first control information to the A-IoT device in a case where at least one of the following conditions is satisfied:
a condition where the second feedback information received by the first device from the A-IoT device indicates that the first device fails/is unsuccessful in entering/writing/rewriting the data information into the A-IoT device;
a condition where the first device does not receive the second feedback information from the A-IoT device within the second time duration N; or
a condition where the first device receives the second feedback information from the A-IoT device within the second time duration N.

In some embodiments, the second time duration is predefined by the protocol.

FIG. 6B is a schematic flowchart of a method for processing information according to an embodiment of the disclosure. As shown in FIG. 6B, an embodiment of the disclosure relates to the method for processing information, which includes the following steps.

At step S6201, the first device enters/writes/rewrites the first information into the A-IoT device.

Optionally, the first device represents different devices in different networking modes, including the RF reader/writer, the access network device (e.g., the base station), the intermediate node, the auxiliary node, the terminal, the core network device, and the like.

Optionally, the writing refers to writing the first information into a blank storage unit in a radio frequency manner, which may also be referred to as configuration or storage. The rewriting refers to writing information into a non-blank storage unit in a radio frequency manner, which may also be referred to as reconfiguration or re-storage.

Optionally, the first information includes static data information, semi-static data information, dynamic data information, static control information, semi-static control information, and dynamic control information.

Optionally, the first information is ambient-IoT encoding. The Ambient-IoT encoding includes at least one code domain, where the code domain indicates determined information.

In one implementation, referring to FIG. 6C, the first device takes the lead to directly perform the writing, and optionally, the A-IoT device sends a feedback.

Specifically, the first device directly sends the first control information to the A-IoT device, where the first control information includes ambient-loT encoding information. The A-IoT device may enter/write/rewrite the corresponding ambient-loT encoding information into a storage unit based on the first control information. Further, the A-IoT device sends the second feedback information to the first device, where the second feedback information is configured for at least one of:
the A-IoT device to feed back to the first device that the first device succeeds in entering/writing/rewriting the code domain information into the A-IoT device;
the A-IoT device to feed back to the first device that the first device fails to enter/write/rewrite the code domain information into the A-IoT device;
the A-IoT device to feed back to the first device whether the first device succeeds in entering/writing/rewriting the code domain information into the A-IoT device; or
the A-IoT device feeds back to the first device whether the first device fails to enter/write/rewritten the code domain information into the A-IoT device.

Further, referring to FIG. 6D, when the second feedback information received by the first device from the A-IoT device indicates that the first device fails/is unsuccessful in entering/writing/rewriting the code domain information into the A-IoT device (e.g., the NACK message), or the first device does not receive the second feedback information from the A-loT device within a specified time duration, or the first device receives the second feedback information from the A-IoT device within a specified time duration, the first device continues to send the first control information to the A-IoT device.

When the second feedback information received by the first device from the A-IoT device indicates that the first device does not fail/succeeds in entering/writing/rewriting the code domain information into the A-IoT device, the first device completes the information writing to the A-IoT device.

The aforementioned specified time duration may be predefined by the protocol, which may be a plurality of consecutive time domain units or a period of absolute time. Measurement units include, but are not limited to, millisecond (ms), second (s), microsecond (µs), minute (min), hour (h), time domain symbol, slot, radio frame, radio subframe, and radio half-frame.

In one implementation, referring to FIG. 6E, the A-IoT device takes the lead, and the first device initiates a writing request first. After the A-IoT device approves the writing request, the first device performs the writing. Further, optionally, the A-IoT device sends a feedback.

Optionally, the first device sends the second control information to the A-IoT device, where the second control information is configured for the first device to request the A-IoT device to permit entering/writing/rewriting the code domain information. The A-IoT device judges the entering/writing/rewriting request of the first device based on the second control information and determines whether to send the first feedback information to the first device. The first feedback information indicates at least one of:
that the A-IoT device permits the first device to enter/write/rewrite the code domain information;
that the A-IoT device does not permit the first device to enter/write/rewrite the code domain information; or
that whether the A-IoT device permits the first device to enter/write/rewrite the code domain information.

Further, the first device sends the first control information to the A-IoT device when at least one of the following conditions is satisfied, where the first control information is configured for the first device to enter/write/rewrite the code domain information into the A-IoT device:
a condition where the first device receives the first feedback information from the A-IoT device, and the first feedback information indicates that the first device is permitted to enter/write/rewrite the code domain information;
a condition where the first device does not receive the first feedback information from the A-IoT device within the first time duration; or
a condition where the first device receives the first feedback information from the A-IoT device within the first time duration.

The first time duration is predefined by the protocol, which may be a plurality of consecutive time domain units or a period of absolute time. Measurement units include, but are not limited to, millisecond (ms), second (s), microsecond (µs), minute (min), hour (h), time domain symbol, slot, radio frame, radio subframe, and radio half-frame.

Further, the A-IoT device sends the second feedback information to the first device, where the second feedback information is configured for at least one of:
the A-IoT device to feed back to the first device that the first device succeeds in entering/writing/rewriting the code domain information into the A-IoT device;
the A-IoT device to feed back to the first device that the first device fails to enter/write/rewrite the code domain information into the A-IoT device;
the A-IoT device to feed back to the first device whether the first device succeeds in entering/writing/rewriting the code domain information into the A-IoT device; or
the A-IoT device to feed back to the first device whether the first device fails to enter/write/rewritten the code domain information into the A-IoT device.

Further, when the second feedback information received by the first device from the A-IoT device indicates that the first device fails/is unsuccessful in entering/writing/rewriting the code domain information into the A-IoT device, or the first device does not receive the second feedback information from the A-IoT device within the second time duration N, or the first device receives the second feedback information from the A-IoT device within the second time duration N, the first device continues to send the first control information to the A-IoT device. The second time duration is predefined by the protocol, which may be a plurality of consecutive time domain units or a period of absolute time. Measurement units include, but are not limited to, millisecond (ms), second (s), microsecond (µs), minute (min), hour (h), time domain symbol, slot, radio frame, radio subframe, and radio half-frame.

**In** one implementation, referring to FIG. 6F, the A-IoT device takes the lead, and information security is taken into consideration. Step S6201 may include: a first step where the first device initiates the identity verification first, i.e., sending the third control information; a second step where the A-IoT device verifies the identity of the first device, and after the identity verification, optionally sends a feedback, i.e., sending the third feedback information such as the ACK message; a third step where the first device writes the data information, i.e., sending the first control information; a fourth step where, optionally, the A-IoT device sends a feedback, i.e., sending the second feedback information such as the ACK message.

In one implementation, referring to FIG. 6G, the A-IoT device takes the lead, and information security is taken into consideration. Step S6201 may include: a first step where the first device initiates the identity verification first, i.e., sending the third control information; a second step where the A-IoT device verifies the identity of the first device, and after the identity verification, optionally sends a feedback, i.e., sending the third feedback information such as the ACK message; a third step where the first device initiates a writing request first, i.e., sending the second control information; a fourth step where A-IoT device confirms the request, i.e., sending the first feedback information such as the ACK message; a fifth step where the first device writes data, i.e., sending the first control information; a sixth steps where, optionally, the A-IoT device sends a feedback, i.e., sending the second feedback information such as the ACK message.

In the embodiments of the disclosure, some or all of the steps and their optional implementations may be combined arbitrarily with some or all of the steps in other embodiments, and may also be combined arbitrarily with the optional implementations of other embodiments.

The embodiments of the disclosure further provide an apparatus for implementing any one of the foregoing methods. For example, an apparatus is provided, which includes units or modules configured to implement each step performed by the terminal in any one of the foregoing methods. For another example, another apparatus is further provided, which includes units or modules configured to implement each step performed by the network device (e.g., the access network device, a core network function node, the core network device, the first device, the IoT device, the intermediate node device, the auxiliary node device, etc.) in any one of the foregoing methods.

It should be understood that the division of units or modules in the above apparatus is merely a logical function division. In actual implementation, all or part of units or modules may be integrated into a single physical entity, or may be physically separated. In addition, the units or modules in the apparatus may be implemented in the form of a processor invoking software: for example, the apparatus includes a processor connected to a memory, where instructions are stored in the memory, and the processor invokes the instructions stored in the memory to implement any of the above methods or the functions of each unit or module of the above apparatus. The processor may be a general-purpose processor, such as a central processing unit (CPU) or a microprocessor, and the memory may be an internal memory of the apparatus or an external memory of the apparatus. Alternatively, the units or modules in the apparatus may be implemented in the form of hardware circuits, and the functions of some or all units or modules may be implemented through the design of hardware circuits. The above hardware circuits may be understood as one or more processors; for example, in one implementation, the hardware circuits are application-specific integrated circuits (ASICs), and the functions of some or all of the above units or modules are implemented through the design of logical relationships between components in the circuits; for another example, in another implementation, the hardware circuits may be implemented through programmable logic devices (PLDs). Taking field programmable gate arrays (FPGAs) as an example, they may include a large number of logic gate circuits, and the connection relationships between the logic gate circuits are configured through configuration files to implement the functions of some or all of the above units or modules. All units or modules of the above apparatus may be fully implemented in the form of a processor invoking software, fully implemented in the form of hardware circuits, or partially implemented in the form of a processor invoking software and the remaining part implemented in the form of hardware circuits.

In the embodiments of the disclosure, the processor is a circuit with signal processing capability. In one implementation, the processor may be a circuit with instruction reading and running capabilities, such as a CPU, a microprocessor, a graphics processing unit (GPU) (which may be understood as a microprocessor), or a digital signal processor (DSP). In another implementation, the processor may implement certain functions through the logical relationship of hardware circuits, where the logical relationship of the hardware circuits is fixed or reconfigurable. For example, the processor is a hardware circuit implemented by an application-specific integrated circuit (ASIC) or a programmable logic device (PLD), such as an FPGA. In a reconfigurable hardware circuit, the process in which the processor loads a configuration file to implement hardware circuit configuration may be understood as the process in which the processor loads instructions to implement the functions of some or all of the above units or modules. In addition, the processor may also be a hardware circuit designed for artificial intelligence, which may be understood as an ASIC, such as a neural network processing unit (NPU), a tensor processing unit (TPU), or a deep learning processing unit (DPU).

FIG. 7A is a schematic diagram of a first device according to an embodiment of the disclosure. As shown in FIG. 7A, the first device 7100 may include at least one of a transceiver module 7101, a processing module 7102, and the like. In some embodiments, the foregoing transceiver module 7101 is configured to send first control information to an IoT device, where the first control information is configured to instruct the IoT device to perform a first operation, and the first operation includes at least one of: data entry, data writing, or data rewriting. Optionally, the transceiver module 7101 is configured to perform at least one of the communication steps such as sending and/or receiving performed by the first device 101 in any of the foregoing methods (for example, steps S2101, S2102, S2103, S2104, S2105, S2106, but not limited thereto), which are not repeated here. Optionally, the foregoing processing module 7102 is configured to perform at least one of the other steps performed by the first device 101 in any of the foregoing methods (for example, determining whether to perform step S2101, whether to perform step S2103, whether to perform step S2105, but not limited thereto), which are not repeated here.

FIG. 7B is a schematic diagram of an IoT device according to an embodiment of the disclosure. As shown in FIG. 7B, the IoT device 7200 may include at least one of a transceiver module 7201, a processing module 7202, and the like. In some embodiments, the aforementioned transceiver module 7201 is configured to receive first control information sent by a first device, where the first control information is configured to instruct the IoT device to perform a first operation, and the first operation includes at least one of: data entry, data writing, or data rewriting. Optionally, the aforementioned transceiver module 7201 is configured to perform at least one of the communication steps such as sending and/or receiving performed by the IoT device 102 in any of the aforementioned methods (for example, steps S2101, S2102, S2103, S2105, S2106, but not limited thereto), which will not be repeated here. Optionally, the aforementioned processing module 7202 is configured to perform at least one of the other steps performed by the IoT device 102 in any of the aforementioned methods (for example, determining the first feedback information, determining the second feedback information, determining the third feedback information, determining whether to send the first feedback information, whether to send the second feedback information, whether to send the third feedback information, etc., but not limited thereto), which will not be repeated here.

In some embodiments, the transceiving module may include a transmitting module and/or a receiving module; the transmitting module and the receiving module may be separate or integrated together. In some embodiments, the transceiving module may be used interchangeably with a transceiver.

In some embodiments, the processing module may be a single module or include a plurality of sub-modules. In some embodiments, the aforementioned plurality of sub-modules respectively perform all or part of the steps required to be executed by the processing module. In some embodiments, the processing module may be used interchangeably with a processor.

FIG. 8A is a schematic diagram of a communication device 8100 according to an embodiment of the disclosure. The communication device 8100 may be a first device or an IoT device. The first device may be, for example, a network device (e.g., an access network device, a core network device, etc.), a terminal (e.g., a UE, etc.), a chip, a chip system, or a processor that supports the network device in implementing any of the foregoing methods, or a chip, a chip system, or a processor that supports the terminal in implementing any of the foregoing methods. The communication device 8100 may be configured to implement the methods described in the foregoing method embodiments, and reference may be made to the descriptions in the foregoing method embodiments for details.

As shown in FIG. 8A, the communication device 8100 includes one or more processors 8101. The processor 8101 may be a general-purpose processor, a special-purpose processor, or the like, such as a baseband processor or a CPU. The baseband processor may be configured to process communication protocols and communication data, and the CPU may be configured to control the communication apparatus (e.g., a base station, a baseband chip, a terminal device, a terminal device chip, a DU, a CU, etc.), execute programs, and process program data. The communication device 8100 is configured to perform any of the foregoing methods.

In some embodiments, the communication device 8100 further includes one or more memories 8102 for storing instructions. In some embodiments, all or part of the memory 8102 may also be located outside the communication device 8100.

In some embodiments, the communication device 8100 further includes one or more transceivers 8103. When the communication device 8100 includes one or more transceivers 8103, the transceiver 8103 is configured to perform at least one of the communication steps such as sending and/or receiving described in the foregoing methods (for example, steps S2101, S2102, S2103, S2105, S2106, S2107, but not limited thereto), and the processor 8101 is configured to perform at least one of the other steps (for example, step S2104, but not limited thereto).

In some embodiments, the transceiver may include a receiver and/or a transmitter, which may be separate or integrated. In some embodiments, terms such as transceiver, transceiver unit, transceiver machine, and transceiver circuit may be replaced with each other, and terms such as transmitter, transmission unit, transmitter machine, and transmission circuit may be replaced with each other, and terms such as receiver, receiving unit, receiver machine, and receiving circuit may be replaced with each other.

In some embodiments, the communication device 8100 may include one or more interface circuits 8104. In some embodiments, the interface circuit 8104 is connected to the memory 8102, and may be configured to receive signals from the memory 8102 or other devices, and to send signals to the memory 8102 or other devices. For example, the interface circuit 8104 may read the instructions stored in the memory 8102 and send the instructions to the processor 8101.

The communication device 8100 described in the aforementioned embodiments may be the network device or the terminal, but the scope of the communication device 8100 described in the disclosure is not limited thereto, and the structure of the communication device 8100 may not be restricted by that shown in Fig. 8A. The communication device may be an independent device or part of a larger device. For example, the communication device may be: 1) an independent integrated circuit (IC), a chip, or a chip system or subsystem; (2) a collection of one or more ICs, in some embodiments, the above IC collection may also include a storage component for storing data and programs; (3) an ASIC, such as a modem; (4) a module embeddable in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others.

FIG. 8B is a schematic diagram of a chip 8200 according to an embodiment of the disclosure. In case the communication device 8100 may be a chip or a chip system, reference may be made to the schematic structural diagram of the chip 8200 as shown in FIG. 8B, but is not limited thereto.

The chip 8200 includes one or more processors 8201, and the chip 8200 is configured to perform any one of the foregoing methods.

In some embodiments, the chip 8200 further includes one or more interface circuits 8202. Optionally, the interface circuit 8202 is connected to a memory 8203, and the interface circuit 8202 may be configured to receive signals from the memory 8203 or other devices, and may be configured to send signals to the memory 8203 or other devices. For example, the interface circuit 8202 may read instructions stored in the memory 8203 and send the instructions to the processor 8201.

In some embodiments, the interface circuit 8202 is configured to perform at least one of the communication steps such as sending and/or receiving described in the foregoing methods (for example, steps S2101, S2102, S2103, S2105, S2106, S2107, but not limited thereto), and the processor 8201 is configured to perform at least one of the other steps (for example, step S2104, but not limited thereto).

In some embodiments, the terms interface circuit, interface, transceiver pin, transceiver, etc., may be used interchangeably.

In some embodiments, the chip 8200 further includes one or more memories 8203 for storing instructions. Optionally, all or part of the memory 8203 may be disposed outside the chip 8200.

The disclosure further provides a storage medium having instructions stored thereon, which, when executed on the communication device 8100, cause the communication device 8100 to perform any one of the foregoing methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The disclosure further provides a program product, which, when executed by the communication device 8100, causes the communication device 8100 to perform any one of the foregoing methods. Optionally, the program product is a computer program product.

The disclosure further provides a computer program, which, when run on a computer, causes the computer to perform any one of the foregoing methods.

## Claims

1. A method for processing information, performed by a first device, comprising:
sending first control information to an internet of things (IoT) device, wherein the first control information is configured to instruct the IoT device to perform a first operation, and the first operation comprises at least one of: data entry, data writing, or data rewriting.

2. The method according to claim 1, wherein the first device is any one of: an access network device, a core network device, a terminal, a radio frequency (RF) reader/writer, an intermediate node device, and an auxiliary node device.

3. The method according to claim 1 or 2, comprising: before sending the first control information,
sending second control information, wherein the second control information is configured to request the first operation to be performed, and the first operation is performed in a case where the IoT device permits the first operation to be performed.

4. The method according to claim 3, further comprising:
receiving first feedback information,
wherein the first feedback information indicates that the IoT device permits the first operation to be performed; or
the first feedback information indicates that the IoT device does not permit the first operation to be performed.

5. The method according to claim 4, wherein sending the first control information to the IoT device comprises:
determining that a first condition is satisfied; and
sending the first control information to the IoT device, wherein the first condition comprises at least one of:
a condition where the first device receives the first feedback information, and the first feedback information indicates that the IoT device permits the first operation to be performed;
a condition where the first device does not receive the first feedback information within a first time duration; or
a condition where the first device receives the first feedback information within a second time duration.

6. The method according to any one of claims 1 to 4, comprising: before sending the first control information,
sending third control information, wherein the third control information is configured to instruct the IoT device to perform an identity verification on the first device, and the first operation is performed in a case where the identity verification is passed.

7. The method according to claim 6, further comprising:
receiving third feedback information,
wherein the third feedback information indicates that the identity verification performed by the IoT device on the first device succeeds; or
the third feedback information indicates that the identity verification performed by the IoT device on the first device fails.

8. The method according to claim 7, wherein sending the first control information to the IoT device comprises:
determining that a second condition is satisfied, and sending the first control information, wherein the second condition comprises at least one of:
a condition where the first device receives the third feedback information, wherein the third feedback information indicates that the identity verification performed by the IoT device on the first device succeeds;
a condition where the first device does not receive the third feedback information within a third time duration; or
a condition where the first device receives the third feedback information within a fourth time duration.

9. The method according to any one of claims 1 to 8, further comprising:
receiving second feedback information,
wherein the second feedback information indicates that the IoT device succeeds in performing the first operation; or
the second feedback information indicates that the IoT device fails to perform the first operation.

10. The method according to claim 9, further comprising:
determining that a third condition is satisfied, and continuing to send the first control information, wherein the third condition comprises at least one of:
a condition where the first device receives the second feedback information, wherein the second feedback information indicates that the IoT device succeeds in performing the first operation;
a condition where the first device does not receive the second feedback information within a fifth time duration; or
a condition where the first device receives the second feedback information within a sixth time duration.

11. The method according to any one of claims 1 to 10, wherein the first control information is configured to instruct the IoT device to perform the first operation on first information, and the first information comprises at least one code domain in encoding information of the IoT device.

12. The method according to claim 11, wherein the encoding information indicates status information of the IoT device, and the status information comprises environmental information and self-information of the IoT device.

13. A method for processing information, performed by an internet of things (IoT) device, comprising:
receiving first control information sent by a first device, wherein the first control information is configured to instruct the IoT device to perform a first operation, and the first operation comprises at least one of: data entry, data writing, or data rewriting.

14. The method according to claim 13, wherein the first device is any one of: an access network device, a core network device, a terminal, a radio frequency (RF) reader/writer, an intermediate node device, and an auxiliary node device.

15. The method according to claim 13 or 14, further comprising:
receiving second control information, wherein the second control information is configured to request the first operation to be performed, and the first operation is performed in a case where the IoT device permits the first operation to be performed.

16. The method according to claim 15, further comprising:
sending first feedback information,
wherein the first feedback information indicates that the IoT device permits the first operation to be performed; or
the first feedback information indicates that the IoT device does not permit the first operation to be performed.

17. The method according to claim 16, wherein the first control information is sent in a case where the first device determines that a first condition is satisfied, and the first condition comprises at least one of:
a condition where the first device receives the first feedback information, and the first feedback information indicates that the IoT device permits the first operation to be performed;
a condition where the first device does not receive the first feedback information within a first time duration; or
a condition where the first device receives the first feedback information within a second time duration.

18. The method according to any one of claims 13 to 17, further comprising:
receiving third control information, wherein the third control information is configured to instruct the IoT device to perform an identity verification on the first device, and the first operation is performed in a case where the identity verification is passed.

19. The method according to claim 18, further comprising:
sending third feedback information,
wherein the third feedback information indicates that the identity verification performed by the IoT device on the first device succeeds; or
the third feedback information indicates that the identity verification performed by the IoT device on the first device fails.

20. The method according to claim 19, wherein the first control information is sent in a case where the first device determines that a second condition is satisfied, and the second condition comprises at least one of:
a condition where the first device receives the third feedback information, wherein the third feedback information indicates that the identity verification performed by the IoT device on the first device succeeds;
a condition where the first device does not receive the third feedback information within a third time duration; or
a condition where the first device receives the third feedback information within a fourth time duration.

21. The method according to any one of claims 13 to 20, further comprising:
sending second feedback information,
wherein the second feedback information indicates that the IoT device succeeds in performing the first operation; or
the second feedback information indicates that the IoT device fails to perform the first operation.

22. The method according to claim 21, further comprising:
maintaining the receiving of the first control information, wherein the first control information is sent by the first device continuously in a case where the first device determines that a third condition is satisfied, and the third condition comprises at least one of:
a condition where the first device receives the second feedback information, wherein the second feedback information indicates that the IoT device succeeds in performing the first operation;
a condition where the first device does not receive the second feedback information within a fifth time duration; or
a condition where the first device receives the second feedback information within a sixth time duration.

23. The method according to any one of claims 13 to 22, wherein the first control information is configured to instruct the IoT device to perform the first operation on first information, and the first information comprises at least one code domain in encoding information of the IoT device.

24. The method according to claim 23, wherein the encoding information indicates status information of the IoT device, and the status information comprises environmental information and self-information of the IoT device.

25. A first device, comprising:
a transceiver module configured to send first control information to an internet of things (IoT) device, wherein the first control information is configured to instruct the IoT device to perform a first operation, and the first operation comprises at least one of: data entry, data writing, or data rewriting.

26. An internet of things (IoT) device, comprising:
a transceiver module configured to receive first control information sent by a first device, wherein the first control information is configured to instruct the IoT device to perform a first operation, and the first operation comprises at least one of: data entry, data writing, or data rewriting.

27. A first device, comprising:
one or more processors; and
a memory coupled to the one or more processors, wherein the memory stores executable instructions, and when the executable instructions are executed by the one or more processors, the first device is caused to perform the method according to any one of claims 1 to 12.

28. An internet of things (IoT) device, comprising:
one or more processors; and
a memory coupled to the one or more processors, where the memory stores executable instructions, and when the executable instructions are executed by the one or more processors, the IoT device is caused to perform the method according to any one of claims 13 to 24.

29. A communication system, comprising a first device and an internet of things (IoT) device, wherein the first device is configured to implement the method for processing information according to any one of claims 1 to 12, and the IoT device is configured to implement the method for processing information according to any one of claims 13 to 24.

30. A storage medium storing instructions, wherein when the instructions are run on a communication device, the communication device is caused to perform the method for processing information according to any one of claims 1 to 12 or claims 13 to 24.
